# EUROPÄISCHE PATENTSCHRIFT

(11) **EP 3 377 308 B1**
(45) Veröffentlichungstag und Bekanntmachung des Hinweises auf die Patenterteilung: **18.12.2019**
(21) Anmeldenummer: 16782253.5
(22) Anmeldetag: 18.10.2016
(51) Int. Cl.: B29C 70/38, B29C 70/54

(54) **FERTIGUNGSANLAGE ZUM LEGEN VON FASERBÄNDERN**
PRODUCTION SYSTEM FOR LAYING FIBRE TAPES
INSTALLATION DE FABRICATION POUR POSER DES BANDES DE FIBRES

(30) Priorität: 16.11.2015 AT 509722015
(43) Veröffentlichungstag der Anmeldung: 26.09.2018
(73) Patentinhaber: Fill Gesellschaft m.b.H., 4942 Gurten (AT)
(72) Erfinder: DANNINGER, Norbert, 4770 Andorf (AT); WITTMANN, Gregor, 4910 Pattigham (AT)
(74) Vertreter: Burger, Hannes
(86) Internationale Anmeldenummer: PCT/EP2016/074976
(87) Internationale Veröffentlichungsnummer: WO 2017/084823

(56) Entgegenhaltungen:
- DE-A1- 3 331 494
- US-A1- 2010 193 103
- US-A1- 2014 299 266

## Beschreibung

Die Erfindung betrifft eine Fertigungsanlage zum Legen von Faserbändern und ein Verfahren zum Legen von Faserbändern.

Aus der DE 10 2014 101 445 A1 ist ein Verfahren zum Aufbau eines Laminats und eine zugehörige Tapelegevorrichtung bekannt. Dabei wird ein mit Binder- und/oder Matrix-Werkstoffen versehenes abzulegendes Tape an eine Ablegeeinrichtung zugeführt. Das zugeführte Tape wird mittels der Ablegeeinrichtung abgelegt bis die zum Laminat korrespondierende Tapestruktur aus neben- und aufeinander abgelegtem Tape erhalten wird, wobei nebeneinander abgelegtes Tape eine Tapelage einer Tapestruktur definiert. Die Tapestruktur wird an eine Ultraschall-Anregungseinrichtung herangeführt und dabei die Binder- und/oder Matrix-Werkstoffe sukzessive Plastifiziert und die einzelnen Tapelagen dadurch miteinander verbunden.

Aus der DE 10 2014 201 060 A1 ist eine Faserlegemaschine zur Herstellung von Fasergelegen bekannt. Die Faserlegemaschine weist einen Werkzeugtisch zum Positionieren eines Formwerkzeugs auf, der mittels eines x-Schlittens linear in einer x-Richtung verfahrbar und um eine vertikale Schwenkachse verschwenkbar ist. Oberhalb des Werkzeugtischs ist ein Faserlegekopf angeordnet, der mittels eines y-Schlittens linear und quer zu der x-Richtung verfahrbar ist.

Die US 2010/1 931 03 A1 offenbart ein Faserlegeverfahren, wobei mehrere unabhängig voneinander verfahrbare Legevehikel vorgesehen sind, die jeweils eine Rohmaterialrolle mit einem darauf aufgenommenen Faserband aufweisen. Die Legevehikel können frei an der Oberfläche, an der sie die Faserbänder legen sollen bewegt werden, wobei die Position bzw. die Bewegung der Legevehikel über ein zentrales Steuersystem vorgegeben wird.

Die US 2014/299266 A1 offenbart ein Verfahren zum Herstellen von Verbundbauteilen mittels einem Faserplatzierungssystem. Das Faserplatzierungssystem weist ein Quetschwalzenantriebssystem auf, mittels welchem einzelne Materialbahnen von einer Materialrolle abgezogen werden können. Durch das Quetschwalzenantriebssystem, wird jede der Materialbahnen vor wärts über eine Schneidevorrichtung hinaus in ihre jeweilige Führungswanne einer Materialzufuhrstation geführt. Nachdem jede Materialbahn über die gewünschte Strecke in ihre jeweilige Führungswanne geführt worden ist, wird das Vakuumsystem der jeweiligen Führungswanne zum Fixieren der Materialbahn aktiviert und anschließend mittels der Schneidvorrichtung die Materialbahn abgetrennt.

Die aus der DE 10 2014 101 445 A1 und der DE 10 2014 201 060 A1 bekannten Vorrichtungen weisen den Nachteil auf, dass das Faserlegen mit derartig aufgebauten Vorrichtungen eine hohe Prozesszeit aufweist.

Aufgabe der vorliegenden Erfindung war es, die Nachteile des Standes der Technik zu überwinden und eine Vorrichtung und ein Verfahren zur Verfügung zu stellen, mittels derer das Faserlegen und/oder Erstellen von Tapestrukturen vereinfacht wird.

Diese Aufgabe wird durch eine Vorrichtung und ein Verfahren gemäß den Ansprüchen gelöst.

Erfindungsgemäß ist eine Fertigungsanlage nach Anspruch 1 zum Legen von Faserbändern ausgebildet. Die Fertigungsanlage umfasst:
- eine Legevorrichtung mit zumindest zwei Abrollvorrichtungen, welche Abrollvorrichtungen jeweils eine Aufnahmevorrichtung zur Aufnahme einer Rohmaterialrolle und eine Schneideinheit zum Schneiden des Faserbandes umfassen;
- eine Ablagevorrichtung mit einer Ablagefläche zur Aufnahme des von der Rohmaterialrolle abgerollten Faserbandes, wobei die Ablagefläche der Ablagevorrichtung und die Abrollvorrichtung der Legevorrichtung zueinander in Längserstreckung der Ablagefläche relativverschiebbar sind, wodurch das Faserband streifenweise auf die Ablagefläche abrollbar ist, wobei die Ablagefläche der Ablagevorrichtung über die Breite der Ablagevorrichtung gesehen in zumindest zwei Teilbereiche unterteilt ist, wobei jeder der Teilbereiche einer Abrollvorrichtung zugeordnet ist und wobei die zumindest zwei Teilbereiche der Ablagefläche und die jeweils zugehörige Abrollvorrichtung der Legevorrichtung unabhängig von der weiteren Abrollvorrichtung und des weiteren Teilbereiches zueinander in Längserstreckung der Ablagefläche relativverschiebbar sind.

Weiters umfasst die Fertigungsanlage:
- eine Legevorrichtung mit zumindest zwei Abrollvorrichtungen, welche Abrollvorrichtungen jeweils eine Aufnahmevorrichtung zur Aufnahme einer Rohmaterialrolle, eine Schneideinheit zum Schneiden des Faserbandes und eine Klemmeinheit zum Klemmen des Faserbandes umfassen;
- eine Ablagevorrichtung mit einer Ablagefläche zur Aufnahme des von der Rohmaterialrolle abgerollten Faserbandes, wobei die Ablagefläche der Ablagevorrichtung und/oder die Abrollvorrichtung der Legevorrichtung eine Linearführung umfassen, sodass Ablagefläche der Ablagevorrichtung und die Abrollvorrichtung der Legevorrichtung zueinander in Längserstreckung der Ablagefläche relativverschiebbar sind, wodurch das Faserband streifenweise auf die Ablagefläche abrollbar ist, wobei
die Ablagefläche der Ablagevorrichtung über die Breite der Ablagevorrichtung gesehen in zumindest zwei Teilbereiche unterteilt ist, wobei jeder der Teilbereiche einer Abrollvorrichtung zugeordnet ist und wobei die zumindest zwei Teilbereiche der Ablagefläche und die jeweils zugehörige Abrollvorrichtung der Legevorrichtung unabhängig von der weiteren Abrollvorrichtung und des weiteren Teilbereiches zueinander in Längserstreckung der Ablagefläche relativverschiebbar sind, wobei die Schneideinheit und/oder die Klemmeinheit mittels einer Linearführung verschiebbar an der Abrollvorrichtung gelagert sind und dadurch die Schneideinheit und die Klemmeinheit zueinander relativverschiebbar sind, wodurch ein in der Klemmeinheit geklemmtes Faserband über die Schneideinheit hinaus nach vor geschoben werden kann, um ein freistehendes Ende zu bilden, welches an der Ablagefläche fixiert werden kann, um mittels der Ablagefläche von der Rohmaterialrolle abgezogen zu werden.

Die erfindungsgemäße Ausbildung der Fertigungsanlage weist den Vorteil auf, dass mittels der Fertigungsanlage mehrere Faserbänder gleichzeitig nebeneinander abgerollt werden können, wobei die einzelnen Faserbänder eine unterschiedliche Länge aufweisen können und frei zueinander positioniert werden können. Dies bringt eine Erhöhung der Flexibilität der Fertigungsanlage mit sich. Dadurch können verbesserte Gelege gefertigt werden.

Ferner kann eine Manipulationsvorrichtung zum Manipulieren des auf der Ablagevorrichtung abgelegten Faserbandes ausgebildet sein, wobei die Manipulationsvorrichtung eine Aufnahmefläche zur Aufnahme des Faserbandes aufweist mittels welcher das auf der Ablagefläche abgelegte Faserband von der Manipulationsvorrichtung aufnehmbar und zu einem weiteren Anlagenteil transferierbar ist. Von Vorteil ist hierbei, dass durch diese Maßnahmen die Flexibilität der Fertigungsanlage erhöht werden kann.

Weiters kann es zweckmäßig sein, dass eine Stapelvorrichtung mit einer Ablagefläche zur Aufnahme des Faserbandes ausgebildet ist an welcher das von der Manipulationsvorrichtung transferierte Faserband stapelbar ist, wobei die Stapelvorrichtung baulich von der Ablagevorrichtung distanziert ist. Von Vorteil ist hierbei, dass dadurch die Prozesszeit zum Herstellen von Gelegen aus Faserbändern verkürzt werden kann, da die einzelnen Faserbänder in einem ersten Verfahrensschritt abgerollt und positioniert werden können und in einem zweiten Verfahrensschritt die einzelnen Schichten übereinander gelegt und/oder verbunden werden können.

Ferner kann vorgesehen sein, dass die Ablagefläche der Stapelvorrichtung luftdurchlässig ausgebildet ist und mit Unterdruck beaufschlagbar ist, wodurch das auf der Ablagefläche abgelegte Faserband auf dieser fixierbar ist. Von Vorteil ist hierbei, dass durch diese Maßnahme erreicht werden kann, dass das Faserband positionsgenau an der Ablegefläche positioniert werden kann und somit ein Verrutschen des Faserbandes relativ zur Ablagefläche hintangehalten wird.

Darüber hinaus kann vorgesehen sein, dass die Ablagefläche der Ablagevorrichtung luftdurchlässig ausgebildet ist und mit Unterdruck beaufschlagbar ist, wodurch das abgerollte Faserband auf der Ablagefläche fixierbar ist. Dadurch kann das Faserband an der Ablagefläche fixiert werden um ein Abrollen des Faserbandes von der Abrollvorrichtung zu ermöglichen. Insbesondere kann dadurch erreicht werden, dass die Rohmaterialrolle nicht einen eigenen Antrieb aufweisen muss. Die Rohmaterialrolle kann gebremst sein, um ein übermäßiges Abspulen von Faserband zu verhindern.

Vorteilhaft ist auch eine Ausprägung, gemäß welcher vorgesehen sein kann, dass die Aufnahmefläche der Manipulationsvorrichtung luftdurchlässig ausgebildet ist und mit Unterdruck beaufschlagbar ist, wodurch das Faserband an der Aufnahmefläche fixierbar ist. Dadurch braucht an der Manipulationsvorrichtung keine komplexe Fixiervorrichtung ausgebildet sein. Insbesondere kann dadurch erreicht werden, dass verschiedenste Faserbandschichten mit unterschiedlichen Umrissen durch die Manipulationsvorrichtung aufgenommen und manipuliert werden können.

Erfindungsgemäß ist an der Legevorrichtung eine Klemmeinheit zum Fixieren eines auf der Rohmaterialrolle befindlichen Faserbandes ausgebildet und ist die Schneideinheit der Abrollvorrichtung relativ zur Klemmeinheit der Abrollvorrichtung verschiebar, wobei die Schneideinheit parallel zur Ablagefläche der Ablagevorrichtung zwischen einer vorgerückten Schneidstellung und einer zurückgezogenen Abrollstellung verschiebbar ist. Von Vorteil ist hierbei, dass das Faserband in der Schneidstellung abgeschnitten werden kann und nach anschließendem Rückzug der Schneideinheit in die Abrollstellung das Faserband gegenüber der Schneideinheit vorsteht und dadurch auf der Ablagefläche der Ablagevorrichtung fixiert werden kann.

Alternativ kann vorgesehen sein, dass an der Legevorrichtung eine Klemmeinheit zum Fixieren eines auf der Rohmaterialrolle befindlichen Faserbandes ausgebildet ist und die Klemmeinheit mittels einer Linearführung relativ zur Schneideinheit verschiebbar an der Legevorrichtung aufgenommen ist, sodass das in der Klemmeinheit geklemmte Faserband über die Schneideinheit hinaus verschoben werden kann, um ein freistehendes Ende des Faserbandes zu bilden, welches an der Ablagefläche der Ablagevorrichtung fixiert werden kann. Durch diese Maßnahme kann das Faserband von der Rohmaterialrolle abgezogen werden.

Ferner kann es zweckmäßig sein, dass die Schneideinheit der Abrollvorrichtung als Guillotine ausgebildet ist, wobei die Schneideinheit ein Schneidmesser und einen Gegenhalter umfasst, welche gemeinsam relativ zur Klemmeinheit der Abrollvorrichtung verschiebbar sind. Von Vorteil ist hierbei, dass eine derartige Schneideinheit einfach aufgebaut sein kann und ein gutes Schneidergebnis liefert.

Darüber hinaus kann vorgesehen sein, dass mehrere Abrollvorrichtungen reihenweise an der Legevorrichtung angeordnet sind. Von Vorteil ist hierbei, dass mehrere Faserbänder nebeneinander an der Legevorrichtung angeordnet sein können.

Weiters kann vorgesehen sein, dass die Legevorrichtung eine Führungsschiene umfasst an welcher die Abrollvorrichtungen reihenweise angeordnet sind, wobei mittels der Führungsschiene jeweils eine Reihe der Abrollvorrichtungen seitlich aus der Legevorrichtung ausziehbar ist. Von Vorteil ist hierbei, dass zum Wechsel der Rohmaterialrollen, welche an den Abrollvorrichtungen aufgenommen sind, die Abrollvorrichtungen aus dem Inneren der Legevorrichtung herausbewegt werden können und somit die Zugängigkeit erhöht und das Wechseln der Rohmaterialrollen vereinfacht werden kann.

Gemäß einer besonderen Ausprägung ist es möglich, dass die Abrollvorrichtungen eine Modulbreite aufweisen, welche der Breite des Faserbandes entspricht und/oder darunter liegt, wobei bei reihenweiser Anordnung der Abrollvorrichtungen in mehreren Reihen die Abrollvorrichtungen in einem n-fachen Abstand der Modulbreite zueinander angeordnet sind, wobei der Zähler n der Anzahl der Reihen -1 entspricht. Von Vorteil ist hierbei, dass die einzelnen Faserbänder dicht an dicht aneinander angelegt werden können, wobei durch die reihenweise Anordnung in mehreren Reihen erreicht werden kann, dass die einzelnen Faserbänder eine geringe Breite aufweisen können.

Entsprechend einer vorteilhaften Weiterbildung kann vorgesehen sein, dass die zumindest zwei Teilbereiche der Ablagefläche der Ablagevorrichtung unabhängig voneinander in Längserstreckung der Ablagefläche relativverschiebbar sind und dass die Abrollvorrichtungen bezüglich der Längserstreckung der Ablagefläche ortsfest an der Legevorrichtung angeordnet sind. Von Vorteil ist hierbei, dass die Abrollvorrichtungen, welche eine höhere Masse aufweisen, zum Abrollen des Faserbandes nicht bewegt werden müssen, sondern dass die Ablagefläche der Ablagevorrichtung bewegt wird, um eine Relativbewegung zwischen Ablagefläche und Abrollvorrichtung zu erreichen. Ein zusätzlicher Vorteil dieser Maßnahmen liegt darin, dass die Medienversorgungen der Abrollvorrichtungen ortsfest ausgeführt sein kann.

Insbesondere kann es vorteilhaft sein, dass jeder Teilbereich der Ablagefläche der Ablagevorrichtung an einem eigenen Ablageprofil angeordnet ist, welche in einer horizontalen Richtung relativ zu einem Grundgestell der Ablagevorrichtung verschiebbar sind, wobei das Ablageprofil mittels einer Linearführung mit dem Grundgestell gekoppelt ist. Derartige Ablageprofile können einfach und effizient für die Aufnahme des Faserbandes ausgebildet sein.

Weiters kann es zweckmäßig sein, wenn das Ablageprofil an einen Zahnriemen gekoppelt ist, wobei ein erster Endabschnitt des Zahnriemens an einen ersten Endabschnitt des Ablageprofils gekoppelt ist und ein zweiter Endabschnitt des Zahnriemens an einen zweiten Endabschnitt des Ablageprofils gekoppelt ist und das Ablageprofil und der Zahnriemen eine Endlosschlaufe bilden, wobei der Zahnriemen mit einer Antriebseinheit in Eingriff steht. Von Vorteil ist hierbei, dass mittels dem Zahnriemen bzw. mittels der Antriebseinheit das Ablageprofil bei einem großen Bewegungsraum verschoben werden kann, wobei das Ablageprofil mit einer hohen Genauigkeit positioniert werden kann.

In einer Alternativvariante kann auch vorgesehen sein, dass das Ablageprofil eine Verzahnung aufweist und mittels einem Zahnrad angetrieben wird.

Ferner kann vorgesehen sein, dass eine Breite eines Teilbereiches der Ablagefläche der Ablagevorrichtung gleich groß oder geringfügig kleiner ist als die Breite des zu verarbeitenden Faserbandes. Von Vorteil ist hierbei, dass das Faserband an den Teilbereichen der Ablagefläche aufgenommen werden kann, wobei einzelne nebeneinander angeordnete Faserbänder dicht an dicht aneinander anliegen können und dass die Faserbänder die Ablagefläche quer zur Verschieberichtung überragen können um dies zu erreichen.

Darüber hinaus kann vorgesehen sein, dass in der Ablagefläche der Ablagevorrichtung Durchtrittsöffnungen angeordnet sind, welche luftdurchlässig sind und mit einer Vorrichtung zum Erzeugen von Unterdruck gekoppelt sind. Von Vorteil ist hierbei, dass dadurch ein Unterdruck zum Fixieren des Faserbandes an der Ablagefläche aufgebracht werden kann.

Vorteilhaft ist auch eine Ausprägung, gemäß welcher vorgesehen sein kann, dass die Teilbereiche der Ablagefläche der Ablagevorrichtung in Längserstreckung gesehen in Längsteilbereiche unterteilt sind, wobei die Längsteilbereiche selektiv mit Unterdruck beaufschlagbar sind. Dadurch kann erreicht werden, dass die Energieeffizienz der Fertigungsanlage verbessert werden kann, indem unnötiges Falschluftansaugen weitestgehend vermieden werden kann.

Gemäß einer Weiterbildung ist es möglich, dass die Aufnahmefläche der Manipulationsvorrichtung um ihre Hochachse drehbar gelagert ist. Dadurch kann erreicht werden, dass die einzelnen von der Ablagevorrichtung aufgenommenen Schichten von Faserbändern in einer vorbestimmten Ausrichtung zueinander gestapelt werden können. Somit kann ein in mehrere Richtungen verstärktes Gelege ausgebildet werden.

Ferner kann es zweckmäßig sein, dass die Manipulationsvorrichtung ein Heizelement aufweist, welches in die Aufnahmefläche integriert ist oder auf diese wirkt. Von Vorteil ist hierbei, dass dadurch die einzelnen Schichten von Faserbändern teilweise aufgeschmolzen und somit miteinander verbunden werden können.

Darüber hinaus kann vorgesehen sein, dass die Manipulationsvorrichtung eine Zuführeinheit zum Zuführen eines Zusatzstoffes, wie etwa eines Harzes, aufweist. Von Vorteil ist hierbei, dass das Gelege mit einem Zusatzstoff versehen werden kann, welcher die thermischen und/oder Mechanischen Eigenschaften des Geleges verbessert.

Weiters kann vorgesehen sein, dass die Stapelvorrichtung einen Bandförderer umfasst, wobei die Ablagefläche an einem endlos umlaufenden Fördergurt des Bandförderers ausgebildet ist. Von Vorteil ist hierbei, dass nach erfolgtem Stapeln der einzelnen Faserbandschichten zu einem Gelege dieses Gelege vom Bandförderer zu einer weiteren Station befördert werden kann.

Gemäß einer besonderen Ausprägung ist es möglich, dass eine Bereitstellungsstation ausgebildet ist, von welcher mittels der Manipulationsvorrichtung eine Zusatzlage, wie etwa eine bereitgestellte Verstärkungsmatte, aufnehmbar und zur Ablagevorrichtung oder zur Stapelvorrichtung transferierbar ist. Von Vorteil ist hierbei, dass das Gelege mit Zusatzlagen verstärkbar ist und somit die mechanischen und/oder thermischen Eigenschaften des Geleges verbessert werden können.

Weiters kann vorgesehen sein, dass die Ablagefläche der Ablagevorrichtung zumindest bereichsweise gekrümmt ist. Von Vorteil ist hierbei, dass durch diese Maßnahme erreicht werden kann, dass die einzelnen Faserbandschichten eine geformte Oberfläche aufweisen können und somit für das Verpressen von 3D-Fasergeflechten vorbereitet sein können. Insbesondere kann das Faserband durch diese Maßnahme drapiert werden.

Ferner kann vorgesehen sein, dass die Aufnahmefläche der Manipulationsvorrichtung zumindest bereichsweise gekrümmt ist, wobei die Aufnahmefläche insbesondere in mehrere Teilbereiche unterteilt ist, welche zueinander verschiebbar sind, wodurch die Krümmung der Aufnahmefläche verstellbar ist. Von Vorteil ist hierbei, dass die Manipulationsvorrichtung an die Oberfläche der Ablagevorrichtung angepasst sein kann. Insbesondere kann vorgesehen sein, dass durch die Möglichkeit der Verstellung der Manipulationsvorrichtung diese flexibel an die Ablagevorrichtung angepasst werden kann.

Ferner kann vorgesehen sein, dass eine Niederhalterrolle ausgebildet ist, mittels welcher das Faserband an die Ablagefläche der Ablagevorrichtung andrückbar ist. Von Vorteil ist hierbei, dass durch diese Maßnahme erreicht werden kann, dass das Faserband an der Ablagefläche angepresst wird und somit an der Ablagefläche anhaftet, wodurch das Faserband durch Verschiebung der Ablagefläche von der Rohmaterialrolle abgezogen werden kann.

Weiters kann vorgesehen sein, dass die Ablagevorrichtung eine erste Maschinenseite mit mehreren Ablageprofilen und damit korrespondierenden Abrollvorrichtungen aufweist und eine zweite Maschinenseite mit mehreren Ablageprofilen und damit korrespondierenden Abrollvorrichtungen aufweist, wobei die Ablageprofile der ersten Maschinenseite und die Ablageprofile der zweiten Maschinenseite derart verschiebbar sind, dass sie in einer Maschinenmitte kämmend ineinander greifen. Von Vorteil ist hierbei, dass die Abrollvorrichtungen auf die erste und die zweite Maschinenseite aufgeteilt sein können, um ausreichend Platz zur Verfügung zu haben. Die abgerollten Faserbänder können anschließend in der Maschinenmitte mittels der Manipulationsvorrichtung abgenommen werden.

Beim Verfahren nach Anspruch 27 zum Legen von Faserbändern ist vorgesehen, dass das Verfahren die folgenden Verfahrensschritte umfasst:
- Bereitstellen eines Faserbandes auf einer Legevorrichtung mit mehreren Abrollvorrichtungen, welche Abrollvorrichtungen jeweils eine Aufnahmevorrichtung zur Aufnahme einer Rohmaterialrolle, eine Klemmeinheit zum Fixieren eines auf der Rohmaterialrolle befindlichen Faserbandes und eine Schneideinheit zum Schneiden des Faserbandes umfassen;
- Aufbringen des Faserbandes auf eine Ablagefläche einer Ablagevorrichtung und fixieren des Faserbandes an der Ablagefläche, wobei die Ablagefläche der Ablagevorrichtung über die Breite der Ablagevorrichtung gesehen in zumindest zwei Teilbereiche unterteilt ist und jeder der Teilbereiche einer Abrollvorrichtung zugeordnet ist und wobei die zumindest zwei Teilbereiche der Ablagefläche und die jeweils zugehörige Abrollvorrichtung der Legevorrichtung unabhängig von der weiteren Abrollvorrichtung und des weiteren Teilbereiches zueinander in Längserstreckung der Ablagefläche relativverschiebbar sind;
- Abrollen des Faserbandes durch zueinander relativverschieben je eines Teilbereiches der Ablagefläche der Ablagevorrichtung und der zugehörigen Abrollvorrichtung der Legevorrichtung, wobei das Faserband an der Ablagefläche fixiert ist, wodurch das Faserband durch Zug der Ablagefläche am Faserband streifenweise auf die Ablagefläche abgerollt wird;
- Ablängen des Faserbandes mittels der Schneideinheit der Abrollvorrichtung.

Von Vorteil am erfindungsgemäßen Verfahren ist, dass aufgrund der einzelnen Verfahrensschritte, welche parallel zueinander ablaufen können, die Gesamtproduktionszeit zum Herstellen eines Geleges vermindert werden kann.

Insbesondere kann es vorteilhaft sein, dass nach dem Aufnehmen des abgelängten Faserbandes die folgenden Verfahrensschritte durchgeführt werden:
- Aufnehmen des abgelängten Faserbandes mittels einer Manipulationsvorrichtung zum Manipulieren des auf der Ablagevorrichtung abgelegten Faserbandes;
- Transferieren des Faserbandes von der Ablagevorrichtung zu einer Stapelvorrichtung;
- Ablegen des Faserbandes an einer Ablagefläche der Stapelvorrichtung;
- Heranfördern der nächsten Faserbandschicht und aufeinander stapeln der Faserbandschichten. Von Vorteil ist hierbei, dass die einzelnen Schichten von Faserbändern übereinander gestapelt und zu einem Gelege verbunden werden können.

Entsprechend einer vorteilhaften Weiterbildung kann vorgesehen sein, dass die Ablagefläche an der Stapelvorrichtung zur Aufnahme des Faserbandes luftdurchlässig ausgebildet ist und mit Unterdruck beaufschlagt wird, wodurch das auf der Ablagefläche abgelegte Faserband auf dieser fixiert wird. Von Vorteil ist hierbei, dass dadurch das Faserband möglichst einfach an der Ablagefläche fixiert werden kann.

Darüber hinaus kann vorgesehen sein, dass das Faserband von einer Aufnahmefläche der Manipulationsvorrichtung dadurch aufgenommen wird, dass diese luftdurchlässig ausgebildet ist und mit Unterdruck beaufschlagt wird, wobei zur Übergabe des Faserbandes von der Ablagevorrichtung auf die Manipulationsvorrichtung ein an der Ablagevorrichtung anliegender Unterdruck abgeschalten wird. Von Vorteil ist hierbei, dass dadurch das Faserband einfach durch die Manipulationsvorrichtung aufgenommen werden kann.

Insbesondere kann es vorteilhaft sein, dass mehrere der Abrollvorrichtungen nebeneinander angeordnet sind, wobei die Abrollvorrichtungen ortsfest mit der Legevorrichtung verbunden sind und die Ablageflächen der Ablegevorrichtung an mehreren parallel zueinander liegenden Profilen ausgebildet sind, wobei ein Muster von Faserbändern dadurch gebildet wird, dass die einzelnen Profile unabhängig voneinander in einer Längserstreckung der Ablagefläche verschoben werden und dadurch die jeweiligen Faserbänder von den Rohmaterialrollen abgezogen werden. Von Vorteil ist hierbei, dass dadurch einzelne Faserbänder zu beliebigen Formen in einzelnen Faserbandschichten gelegt werden können.

Weiters ist es zweckmäßig, dass zum Abschneiden des Faserbandes die Schneideinheit der Abrollvorrichtung in einer vorgeschobenen Schneidstellung betätigt wird und das Faserband mittels der Klemmeinheit geklemmt wird und nach dem Abschneiden des Faserbandes die Schneideinheit und/oder die Klemmeinheit relativ zueinander zusammen verschoben werden, sodass ein Anschnitt des Bandes gegenüber der Schneideinheit vorstehend verschoben wird. Von Vorteil ist hierbei, dass nach dem Abschneiden des Faserbandes dieses zum Abrollen der nächsten Länge vorbereitet wird.

Ferner ist vorgesehen, dass zum Aufbringen des Faserbandes auf die Ablagefläche der Ablagevorrichtung das Faserband mittels der Klemmeinheit geklemmt wird und anschließend die Klemmeinheit und/oder die Schneideinheit relativ zueinander aufeinander zu verschoben werden, wodurch das Faserband über die Schneideinheit hinaus nach vor geschoben wird, sodass ein freistehendes Ende des Faserbandes gebildet ist, wobei anschließend das Faserband an der Ablagefläche der Ablagevorrichtung fixiert wird, sodass das Faserband relativ zur Ablagefläche der Ablagevorrichtung unverschieblich an dieser aufgenommen ist und anschließend durch Verschieben der Ablagefläche der Ablagevorrichtung relativ zur Abrollvorrichtung der Legevorrichtung von der Rohmaterialrolle abgerollt werden kann. Durch diese Maßnahme ist es möglich das Faserband mit hoher Genauigkeit an der Ablagefläche zu positionieren.

Darüber hinaus kann vorgesehen sein, dass zum Fixieren des freistehenden Ende des Faserbandes an der Ablagefläche der Ablagevorrichtung ein Vakuum an der Ablagefläche aufgebracht wird und/oder eine Niederhalterolle auf das Faserband gedrückt wird. Dadurch kann erreicht werden, dass das Faserband gut an der Ablagefläche anhaftet, um mittels der Ablagefläche von der Rohmaterialrolle abgezogen werden zu können. Insbesondere kann vorgesehen sein, dass die Niederhalterolle angetrieben ist und das Faserband zwischen der Ablagefläche und der Niederhalterolle geklemmt ist. Wenn die Niederhalterolle angetrieben wird, kann das Ablageprofil ebenfalls durch Reibung mittels der Niederhalterolle verschoben werden werden. Somit kann die Niederhalterolle gleichzeitig als Antriebssystem zum Verschieben des Ablageprofiles dienen.

Weiters kann vorgesehen sein, dass am Faserband, welches an der Rohmaterialrolle angeordnet ist ein Trennband appliziert ist, welches zwischen den einzelnen Faserbandschichten liegt, wobei beim Abrollen des Faserbandes das Trennband an einer Trennbandrolle aufgewickelt wird. Insbesondere kann hierbei vorgesehen sein, dass die Trennbandrolle angetrieben ist und daher das Trennband aktiv dazu benutzt werden kann, um das Faserband aktiv von der Rohmaterialrolle abzuziehen.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Ansicht einer Ausführungsvariante Fertigungsanlage zum Legen von Faserbändern;
- Fig. 2: eine perspektivische Detailansicht einer Ausführungsvariante einer Ablagevorrichtung der Fertigungsanlage;
- Fig. 3: eine perspektivische Ansicht einer Ausführungsvariante einer Abrollvorrichtung;
- Fig. 4: eine Ansicht von Vorne auf eine Abrollvorrichtung;
- Fig. 5: eine Draufsicht eines schematischen Layouts der Anordnung von Abrollvorrichtungen;
- Fig. 6: eine perspektivische Ansicht einer Abrollvorrichtung mit einer Aufnahmevorrichtung in Form eines Aufnahmeprofils;
- Fig. 7: eine schematische Darstellung einer Ansicht von Vorne von zwei nebeneinander angeordneten Aufnahmeprofilen mit darauf aufgelegten Faserbändern;
- Fig. 8: eine Seitenansicht einer Abrollvorrichtung mit einem Aufnahmeprofil;
- Fig. 9: ein weiteres Ausführungsbeispiel eines Aufnahmeprofils mit Verzahnung;
- Fig. 10: ein weiteres Ausführungsbeispiel einer Aufnahmevorrichtung;
- Fig. 11: eine Draufsicht auf ein weiteres Ausführungsbeispiel einer Aufnahmevorrichtung;
- Fig. 12: eine Draufsicht auf ein weiteres Ausführungsbeispiel der Fertigungsanlage;
- Fig. 13: eine schematische Seitenansicht eines weiteren Ausführungsbeispiels einer Manipulationsvorrichtung mit segmentiertem Aufnahmekopf;
- Fig. 14: eine schematische Detailansicht eines Ausführungsbeispiels des segmentierten Aufnahmekopfes;
- Fig. 15: eine perspektivische Darstellung eines weiteren Ausführungsbeispiels der Fertigungsanlage;
- Fig. 16: eine perspektivische Darstellung des weiteren Ausführungsbeispiels der Fertigungsanlage mit teilweise ausgeblendeten Anlagenkomponenten;
- Fig. 17: eine perspektivische Darstellung eines weiteren Ausführungsbeispiels der Abrollvorrichtung;
- Fig. 18: eine schematische Seitenansicht eines Aufbaues eines weiteren Ausführungsbeispiels einer Abrollvorrichtung mit Trennband und Trennbandrolle.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

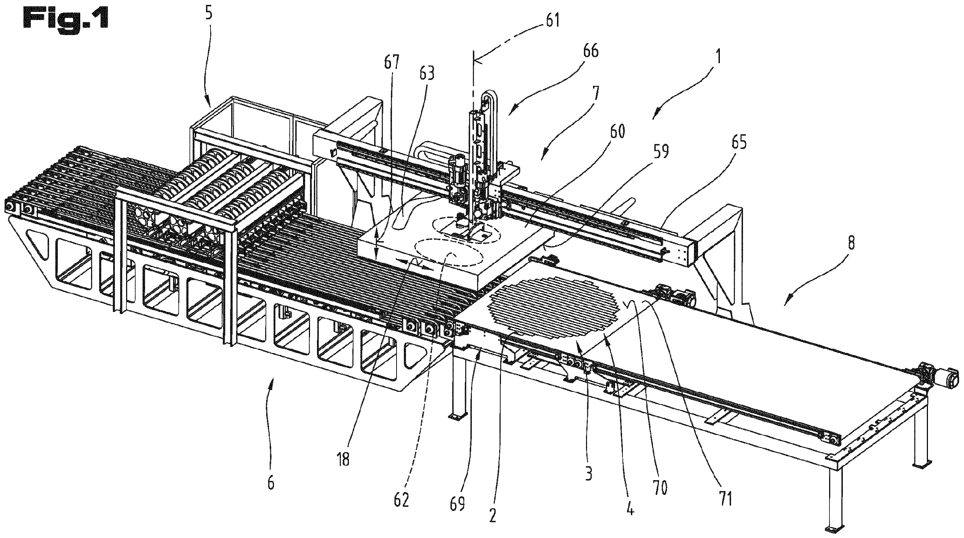

Fig. 1 zeigt eine perspektivische Ansicht einer Fertigungsanlage 1 zum Legen von Faserbändern 2. Mittels der Fertigungsanlage 1 können die Faserbänder 2 in eine Faserbandschicht 3 gelegt werden. Die Faserbandschicht 3 kann durch die Verwendung von einzelnen Faserbändern 2 in der Fertigungsanlage 1 eine konturierte und an den jeweiligen Einsatz angepasste Außenumrandung aufweisen. Weiters kann vorgesehen sein, dass in der Fertigungsanlage 1 mehrere der Faserbandschichten 3 übereinandergelegt und dadurch zu einem Gelege 4 weiterverarbeitet werden.

Die Faserbänder 2 welche in der Fertigungsanlage 1 verarbeitet werden, können beispielsweise in Form von trockenen Fasern ausgebildet sein. Weiters ist es auch möglich, dass die Faserbänder 2 als vorimprägnierte Fasern ausgebildet sind, welche Reaktionsharze aufweisen, die aus einer meist hochviskosen, jedoch noch nicht polymerisierten duroplastischen Kunststoffmatrix und/oder aus einer thermoplastischen Kunststoffmatrix, oder auch einer anderen Matrix bestehen. Darüber hinaus können die Faserbänder 2 Klebeschichten aufweisen durch welche einzelne Faserbandschichten 3 aneinander anhaften können.

Die Fertigungsanlage 1 umfasst eine Legevorrichtung 5 zum Legen des Faserbandes 2, eine Ablagevorrichtung 6 zur Aufnahme der gelegten Faserbänder 2 und eine Manipulationsvorrichtung 7 mittels welcher die auf der Ablagevorrichtung 6 gelegten Faserbänder 2 bzw. Faserbandschichten 3 manipuliert werden können.

Weiters kann vorgesehen sein, dass die Fertigungsanlage 1 eine Stapelvorrichtung 8 umfasst, an welcher die einzelnen Faserbandschichten 3 mittels der Manipulationsvorrichtung 7 zu einem Gelege 4 gestapelt werden können. Die beschriebenen Hauptbauteile der Fertigungsanlage 1, insbesondere Legevorrichtung 5, Ablagevorrichtung 6, Manipulationsvorrichtung 7 und Stapelvorrichtung 8 können jeweils als Funktionseinheit ausgebildet sein und modular an der Fertigungsanlage 1 aufgebaut sein.

In der folgenden Beschreibung werden verschiedene Ausbildungsmöglichkeiten der einzelnen Hauptbauteile der Fertigungsanlage 1 beschrieben, wobei die Ausgestaltungsmöglichkeiten modulweise behandelt werden und für die Zusammenschau der Module auf die Fig. 1 verwiesen wird.

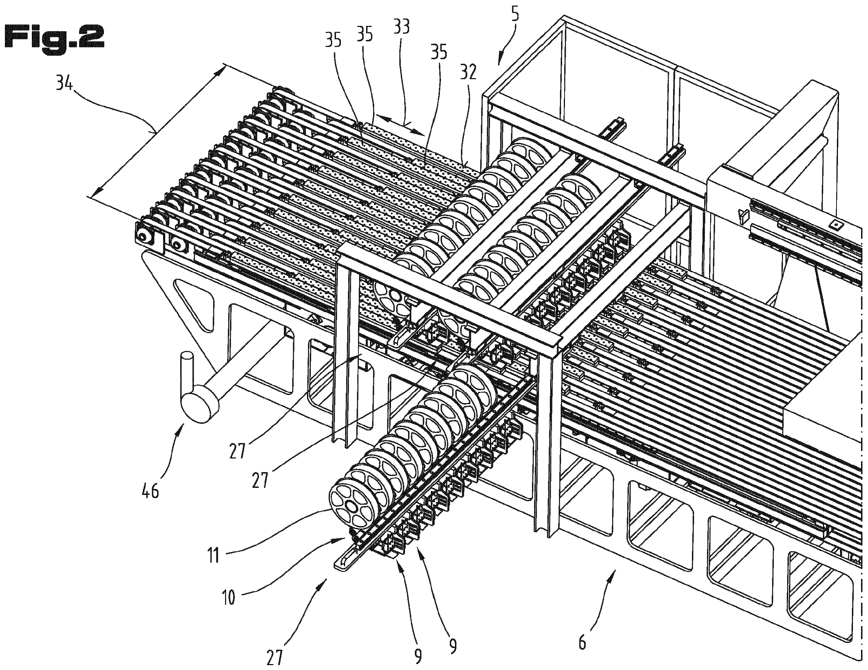

Fig. 2 zeigt eine perspektivische Detailansicht einer möglichen Ausführungsvariante der Legevorrichtung 5 und der Ablagevorrichtung 6, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in der vorangegangenen Fig. 1 hingewiesen bzw. Bezug genommen.

Die Legevorrichtung 5 umfasst zumindest zwei Abrollvorrichtungen 9, welche nebeneinander angeordnet sind und welche jeweils eine Aufnahmevorrichtung 10 zur Aufnahme einer Rohmaterialrolle 11 aufweisen.

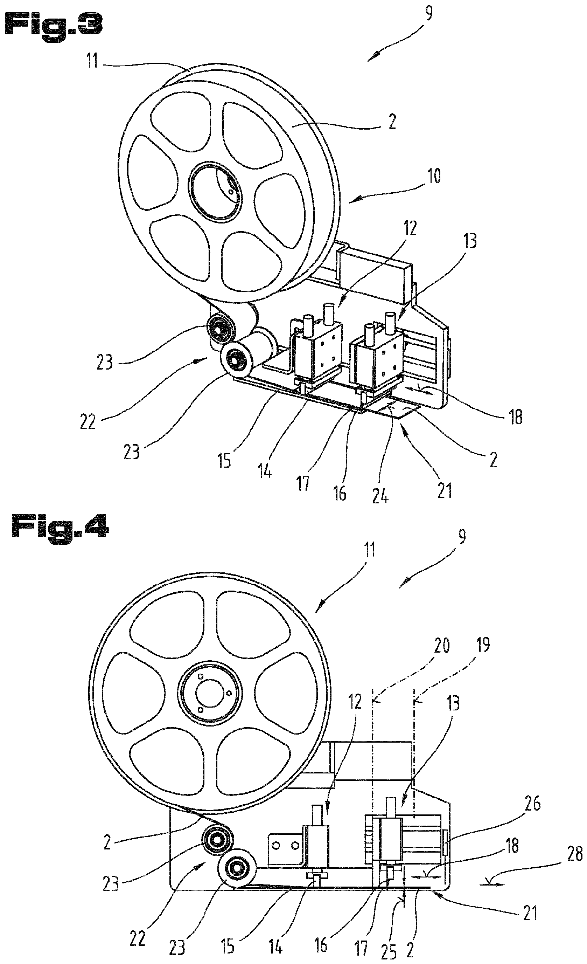

In der Fig. 3 ist die Abrollvorrichtung 9 in einer perspektivischen Ansicht dargestellt. In der Fig. 4 ist die Abrollvorrichtung 9 in einer Ansicht von der Seite dargestellt. Für gleiche Teile werden wiederum gleiche Bezugszeichen bzw. Bauteilbezeichnungen wie in den vorangegangenen Figuren 1 bis 3 verwendet. Um unnötige Wiederholungen zu vermeiden, wird auf die detaillierte Beschreibung in den vorangegangenen Figuren 1 bis 3 hingewiesen bzw. Bezug genommen. Die Abrollvorrichtung 9 wird auf Basis einer Zusammenschau der Figuren 2 bis 4 beschrieben.

Die Abrollvorrichtung 9 umfasst eine Klemmeinheit 12 zum Fixieren des von der Rohmaterialrolle 11 abzuwickelnden Faserbandes 2 und eine Schneideinheit 13 zum Schneiden des Faserbandes 2. Wie aus Fig. 3 ersichtlich, kann vorgesehen sein, dass die Klemmeinheit 12 einen Klemmbacken 14 aufweist und dass das Faserband 2 zwischen Klemmbacken 14 und einem Gegenhalter 15 geklemmt wird. Der Klemmbacken 14 kann hierbei an einem Aktor, wie etwa einem Pneumatikzylinder verschiebbar aufgenommen sein.

Weiters kann vorgesehen sein, dass die Schneideinheit 13 in Form einer Guillotine ausgebildet ist, wobei die Schneideinheit 13 ein Schneidmesser 16 und einen Gegenhalter 17 umfassen kann. Der Gegenhalter 17 des Schneidmessers 16 kann direkt neben dem Gegenhalter 15 des Klemmbacken 14 anschließend an diesen angeordnet sein.

Weiters kann vorgesehen sein, dass das Schneidmesser 16 an einem Aktor, wie etwa einem Pneumatikzylinder angeordnet ist, wodurch das Schneidmesser 16 relativ zum Gegenhalter 17 bewegt werden kann und somit die Schneidbewegung durchgeführt werden kann.

Außerdem ist es möglich, dass die Schneideinheit 13 in horizontaler Richtung 18 relativ zur Klemmeinheit 12 verschiebbar an der Abrollvorrichtung 9 angeordnet ist. Dadurch kann die Schneideinheit 13 zwischen einer vorgeschobenen Schneidstellung 19 und einer zurückgezogenen Abrollstellung 20 hin und her bewegt werden. Dies ist insbesondere dazu notwendig, um nach dem Abschneiden des Faserbandes 2 einen Bandansatz 21 zur Verfügung zu stellen, an welchem das Faserband 2 zum Abrollen eines weiteren Streifens fixiert werden kann.

Wie besonders gut in Fig. 4 ersichtlich, kann vorgesehen sein, dass bei einer Positionierung der Schneideinheit 13 in ihrer Abrollstellung 20, der Gegenhalter 17 des Schneidmessers 16 und der Gegenhalter 15 des Klemmbackens 14 aneinander anliegen.

Weiters kann vorgesehen sein, dass in der Abrollvorrichtung 9 das von der Rohmaterialrolle 11 abgerollte Faserband 2 durch eine Umlenkrollenanordnung 22 geführt wird, welche zumindest eine Umlenkrolle 23 aufweist. Im Verlauf des Faserbandes 2 gesehen, kann neben der Umlenkrollenanordnung 22 die Klemmeinheit 12 und dem Verlauf des Faserbandes 2 weiter folgend die Schneideinheit 13 angeordnet sein.

Das Faserband 2 weist eine Breite 24 auf, welche zwischen 2 mm und 200 mm, insbesondere zwischen 5 mm und 100 mm, bevorzugt zwischen 10 mm und 50 mm betragen kann. Weiters weist das Faserband 2 eine Bandstärke 25 auf, welche zwischen 0,03 mm und 10 mm, insbesondere zwischen 0,5 mm und 5 mm, bevorzugt zwischen 0,8 mm und 3 mm betragen kann.

Wie aus Fig. 4 ersichtlich, kann eine optische Einheit 26 vorgesehen sein, welche zur Banderkennung dient. Die optische Einheit 26 kann vorzugsweise neben der Schneideinheit 13 an der Abrollvorrichtung 9 angeordnet sein, sodass mittels der optischen Einheit 26 beim Abrollen des Faserbandes 2 die Länge eines abgerollten Faserstreifens ermittelt werden kann. Weiters kann die optische Einheit 26 derart ausgebildet sein, dass die Qualität und/oder Abmessungen des Faserbandes 2 geprüft werden kann. Darüber hinaus kann die optische Einheit 26 zum Identifizieren des Faserbandes 2 eingesetzt werden.

Alternativ dazu oder zusätzlich kann vorgesehen sein, dass in der Umlenkrolle 23 oder in der Aufnahmevorrichtung 10 für die Rohmaterialrolle 11 ein Erfassungs- oder Messsystem verbaut ist, mittels welchem die Länge des abgerollten Bandes erfasst werden kann.

Weiters kann vorgesehen sein, dass in der Aufnahmevorrichtung 10 für die Rohmaterialrolle 11 eine Bremseinheit verbaut ist, sodass die Rohmaterialrolle 11 gebremst werden kann und dadurch ein unerwünschtes Abwickeln des Faserbandes 2 unterbunden werden kann.

In einer alternativen Ausführungsvariante kann vorgesehen sein, dass die Aufnahmevorrichtung 10 für die Rohmaterialrolle 11 eine Antriebseinheit umfasst, mittels welcher die Rohmaterialrolle 11 bedarfsweise angetrieben bzw. abgebremst werden kann. Dadurch kann eine erhöhte Zugbelastung am Faserband 2 bei erhöhten Bearbeitungsgeschwindigkeiten hintangehalten werden, wodurch die Bearbeitungsgeschwindigkeiten weiter erhöht werden können.

In einer alternativen Ausführungsform kann auch vorgesehen sein, dass die Klemmeinheit 12 in horizontaler Richtung 18 verschiebbar ist. Diese Verschiebbarkeit kann alternativ oder zusätzlich zur Verschiebbarkeit der Schneideinheit 13 ausgebildet sein.

Wie besonders gut in Fig. 2 ersichtlich, kann vorgesehen sein, dass mehrere Abrollvorrichtungen 9 der Legevorrichtung 5 aufgenommen sind, wobei die Abrollvorrichtungen 9 in Reihen 27 an der Legevorrichtung 5 angeordnet sein können. Beispielsweise kann vorgesehen sein, dass die Legevorrichtung 5 drei Reihen 27 aufweist, wobei pro Reihe 27 beispielsweise zwischen 5 und 15 Abrollvorrichtungen 9 angeordnet sein können. Die einzelnen Faserbänder 2 können in einer Abrollrichtung 28 von den Abrollvorrichtungen 9 abgerollt werden.

Weiters kann vorgesehen sein, dass die Legevorrichtung 5 eine Führungsschiene 29 umfasst, an welcher die Abrollvorrichtungen 9 reihenweise angeordnet sind. Mittels der Führungsschiene 29 können die Abrollvorrichtungen 9 seitlich aus der Legevorrichtung 5 ausziehbar sein. Insbesondere kann die Führungsschiene 29 derart ausgebildet sein, dass die Abrollvorrichtungen 9 aus dem Arbeitsbereich der Legevorrichtung 5 herausgezogen werden können und dadurch das Rüsten der Fertigungsanlage 1 mit neuen Rohmaterialrollen 11 erleichtert werden kann.

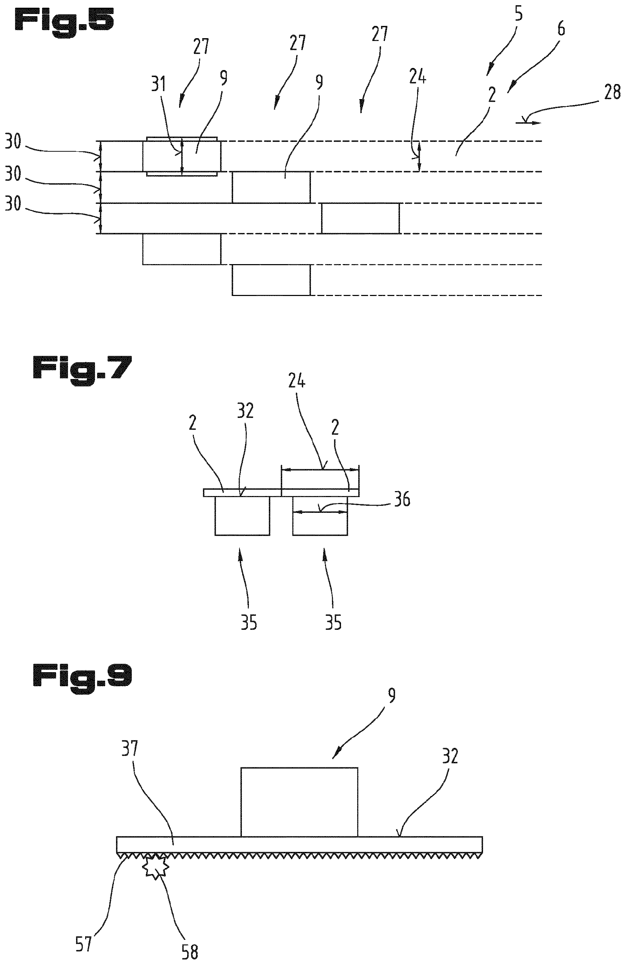

Fig. 5 zeigt in einer schematischen Darstellung eine Draufsicht auf die Legevorrichtung 5. Wie aus Fig. 5 ersichtlich, kann vorgesehen sein, dass die Abrollvorrichtungen 9 eine Modulbreite 30 aufweisen, welche der Breite 24 des Faserbandes 2 entspricht. Einzelne in den Reihen 27 angeordnete Abrollvorrichtungen 9 können im Abstand der Modulbreite 30 oder einem Vielfachen davon zueinander angeordnet sein. Bei Anordnung der Abrollvorrichtungen 9 in drei Reihen 27 kann beispielsweise vorgesehen sein, dass jeweils in einer Reihe 27 zwischen zwei nebeneinander liegenden Abrollvorrichtungen 9 ein Abstand einer zweifachen Modulbreite 30 ausgebildet ist. Durch diese Maßnahmen kann erreicht werden, dass die abgerollten Faserbänder 2 dicht an dicht an der Ablagevorrichtung 6 aufgelegt werden können.

Die Modulbreite 30 der Abrollvorrichtung 9 ist hierbei ein virtuelles Maß. Insbesondere ist es denkbar, dass eine tatsächliche Breite 31 der Abrollvorrichtung 9 größer ist als die Modulbreite 30. Durch die reihenweise Anordnung der Abrollvorrichtungen 9 kann bei einer derartigen Ausbildung vermieden werden, dass die nebeneinander angeordneten Abrollvorrichtungen 9 miteinander kollidieren.

Wenn die tatsächliche Breite 31 der Abrollvorrichtung 9 gleich groß ist wie die Modulbreite 30 der Abrollvorrichtung 9, so wäre es auch denkbar, dass nur eine Reihe 27 von Abrollvorrichtungen 9 ausgebildet sein muss, wobei die Abrollvorrichtungen 9 bei einer derartigen Ausführungsvariante dicht an dicht aneinander anliegen. Bei einer derartigen Ausführung müssten alle Rohmaterialrollen 11 an einer gemeinsamen Lagerstelle gelagert sein.

Wie in Fig. 2 ersichtlich, weist die Ablagevorrichtung 6 eine Ablagefläche 32 auf, an welcher das von der Abrollvorrichtung 9 abgerollte Faserband 2 abgelegt und positioniert werden kann.

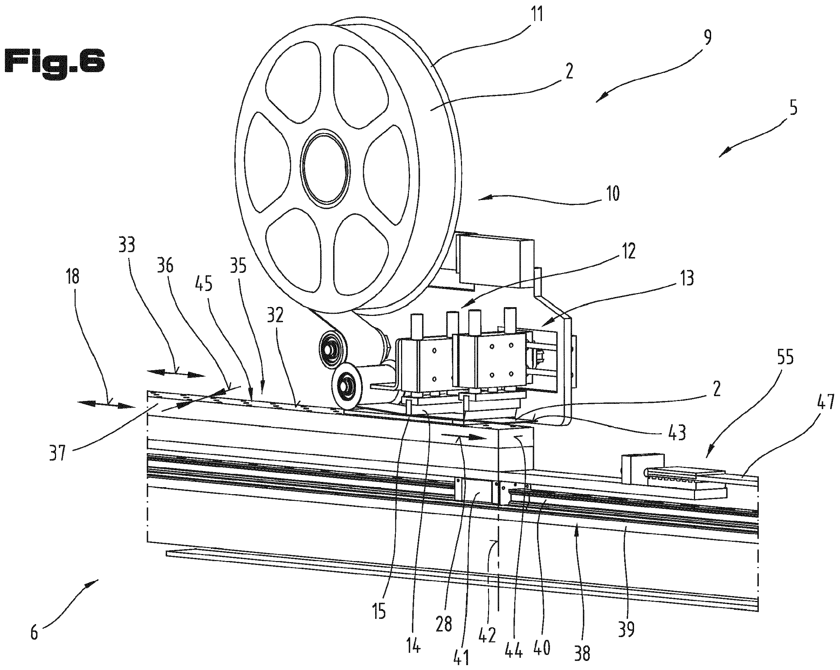

Fig. 6 zeigt eine perspektivische Detailansicht einer Abrollvorrichtung 9 mit der unterhalb angeordneten Ablagevorrichtung 6.

Wie aus einer Zusammenschau der Fig. 2 und Fig. 6 ersichtlich, kann vorgesehen sein, dass das Faserband 2 in einer Längserstreckung 33 der Ablagefläche 32 der Länge nach ausgerollt wird. Weiters ist vorgesehen, dass die Ablagefläche 32 über die Breite 34 der Ablagevorrichtung 6 gesehen, in mehrere Teilbereiche 35 untergliedert ist. Die Teilbereiche 35 können jeweils zur Aufnahme eines Faserbandes 2 dienen.

Weiters kann vorgesehen sein, dass je Teilbereich 35 eine Abrollvorrichtung 9 zum Abrollen des Faserbandes 2 ausgebildet ist. Dadurch kann an jedem Teilbereich 35 ein einzelner Faserstreifen eines Faserbandes 2 ausgelegt werden.

Weiters kann vorgesehen sein, dass eine Breite 36 des Teilbereiches 35 in etwa gleich groß ist wie die Breite 24 des Faserbandes 2.

In einer Alternativvariante kann auch vorgesehen sein, dass die Breite 36 des Teilbereiches 35 geringfügig kleiner als die Breite 24 des Faserbandes 2 ist. Dies ist schematisch in Fig. 7 dargestellt. Bei einer derartigen Ausführungsvariante steht das Faserband 2 seitlich gegenüber der Ablagefläche 32 des Teilbereiches 35 vor. Dadurch kann erreicht werden, dass zwei nebeneinander angeordnete Faserbänder 2 einander berühren.

Weiters kann, wie aus Fig. 6 ersichtlich, vorgesehen sein, dass die Ablagefläche 32 an einem Ablageprofil 37 ausgebildet ist, welches zur Aufnahme der Faserbänder 2 dient. Das Ablageprofil 37 kann mittels einer Linearführung 38 mit einem Grundgestellt 39 der Ablagevorrichtung 6 gekoppelt sein. Insbesondere kann vorgesehen sein, dass die Linearführung 38 eine Führungsschiene 40 umfasst, welche am Grundgestell 39 angeordnet ist und ein Führungsschlitten 41 umfasst, welcher mit dem Ablageprofil 37 gekoppelt ist und welcher in der Führungsschiene 40 verschiebbar aufgenommen ist.

Durch die Linearführung 38 kann das Ablageprofil 37 in horizontaler Richtung 38 verschoben werden, wodurch die Abrollvorrichtung 9 und das Ablageprofil 37 relativ zueinander verschiebbar sind.

Durch Verschiebung des Ablageprofiles 37 in horizontaler Richtung 38 respektive in Abrollrichtung 28 kann das Faserband 2 von der Rohmaterialrolle 11 abgerollt werden und in Längserstreckung 33 auf der Ablagefläche 32 des Ablageprofiles 37 abgelegt werden. Anschließend kann das Faserband 2 mittels der Schneideinheit 13 auf die gewünschte Länge abgelängt werden. Nachdem dann das abgelängte und positionierte Faserband 2 mittels der Manipulationsvorrichtung 7 von der Ablagefläche 32 genommen wurde, kann die Schneideinheit 13 in ihre Abrollstellung 20 verschoben werden und das Ablageprofil 37 in eine Grundstellung 42 verschoben werden.

Vorzugsweise ist die Grundstellung 42 derart gewählt, dass eine Schnittfläche 43 des Faserbandes 2 und eine Stirnfläche 44 des Ablageprofiles 37 bündig zueinander liegen. Anschließend kann die Ablagefläche 32 mit Vakuum beaufschlagt werden, sodass der Bandansatz 21, welcher gegenüber der Schneideinheit 13 vorsteht, an der Ablagefläche 32 festgesaugt wird und somit mittels dem Ablageprofil 37 das Faserband 2 von der Rohmaterialrolle 11 abgezogen werden kann. Natürlich kann das Faserband 2 auch durch eine sonstige Maßnahme an der Ablagefläche 32 geklemmt oder fixiert werden.

Um den Unterdruck an der Ablagefläche 32 aufbringen zu können, kann vorgesehen sein, dass an der Ablagefläche 32 mehrere Durchtrittsöffnungen 45 ausgebildet sind, an welchen Luft abgesaugt wird. Insbesondere kann vorgesehen sein, dass die Durchtrittsöffnungen 45 mit einer Vorrichtung zum Erzeugen von Unterdruck 46 strömungsverbunden sind. Eine derartige Vorrichtung zum Erzeugen von Unterdruck 46 kann beispielsweise durch ein Axial- oder Radialgebläse realisiert werden.

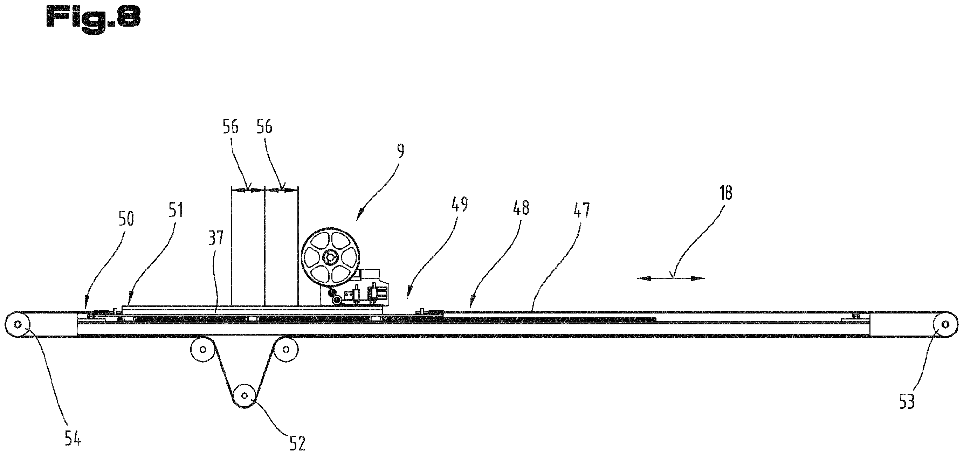

Fig. 8 zeigt ein Ausführungsbeispiel der Abrollvorrichtung 9 mit der Ablagevorrichtung 6 in einer Seitenansicht, wobei wiederum für gleiche Teile gleiche Bezugszeichen bzw. Bauteilbezeichnungen wie in den vorangegangenen Figuren 1 bis 7 verwendet werden. Um unnötige Wiederholungen zu vermeiden, wird auf die detaillierte Beschreibung in den vorangegangenen Figuren 1 bis 7 hingewiesen bzw. Bezug genommen.

Wie aus einer Zusammenschau der Fig. 2, 6 und 8 ersichtlich, kann vorgesehen sein, dass das Ablageprofil 37 an einen Zahnriemen 47 gekoppelt ist, mittels welchem das Ablageprofil 37 in horizontaler Richtung 18 verschoben werden kann. Insbesondere kann vorgesehen sein, dass ein erster Endabschnitt 48 des Zahnriemens 47 an einen ersten Endabschnitt 49 des Ablageprofils 37 gekoppelt ist. Analog dazu kann ein zweiter Endabschnitt 50 des Zahnriemens 47 mit einem zweiten Endabschnitt 51 des Ablageprofils 37 gekoppelt sein. Dadurch können das Ablageprofil 37 und der Zahnriemen 47 eine Endlosschlaufe bilden. Weiters kann vorgesehen sein, dass der Zahnriemen 47 mit einer Antriebseinheit 52 gekoppelt ist, mittels welcher das Ablageprofil 37 in horizontaler Richtung 18 verschoben werden kann. Der Zahnriemen 47 kann an einer ersten Umlenkeinheit 53 und an einer zweiten Umlenkeinheit 54 umgelenkt sein.

Die Befestigung des Zahnriemens 47 am Ablageprofil 37 kann mittels Befestigungsbacken 55 erfolgen. Hierbei ist es denkbar, dass an den Befestigungsbacken 55 eine Spanneinheit angeordnet ist, mittels welcher der Zahnriemen 47 gespannt werden kann. Alternativ dazu kann vorgesehen sein, dass der Zahnriemen 47 durch Verschiebung der Antriebseinheit 52 gespannt werden kann.

Weiters kann vorgesehen sein, dass das Ablageprofil 37 in mehrere Längsteilbereiche 56 unterteilt ist, wobei die Längsteilbereiche 56 selektiv mit Unterdruck beaufschlagbar sind. Dadurch kann beim Fixieren es Faserbandes 2 an der Ablagefläche 32 der Ablagevorrichtung 6 eine übermäßige Leckage von Luft bzw. Unterdruck vermieden werden.

Wie in Fig. 2 ersichtlich, kann vorgesehen sein, dass mehrere derartig aufgebauter Einheiten nebeneinander angeordnet sein können.

Fig. 9 zeigt in einer schematischen Darstellung eine weitere Ausführungsvariante des Aufbaus des Ablageprofils 37. Wie aus Fig. 9 ersichtlich, kann vorgesehen sein, dass das Ablageprofil 37 teilweise als Zahnstange 57 ausgebildet ist bzw. eine Verzahnung aufweist. Alternativ kann vorgesehen sein, dass eine Zahnstange 57 ausgebildet ist, welche an der Linearführung 38 angeordnet ist und mit einem Ritzel 58 in Eingriff steht. Die Zahnstange 57 kann beispielsweise an der Unterseite des Ablageprofils 37 ausgebildet sein. Alternativ dazu ist es auch denkbar, dass die Zahnstange 57 seitlich des Ablageprofils 37 ausgebildet ist. Eine Ausführung mit Zahnstange 57 weist den Vorteil auf, dass bei einem derartigen System die Genauigkeit zur Positionierung des Ablageprofils 37 erhöht werden kann.

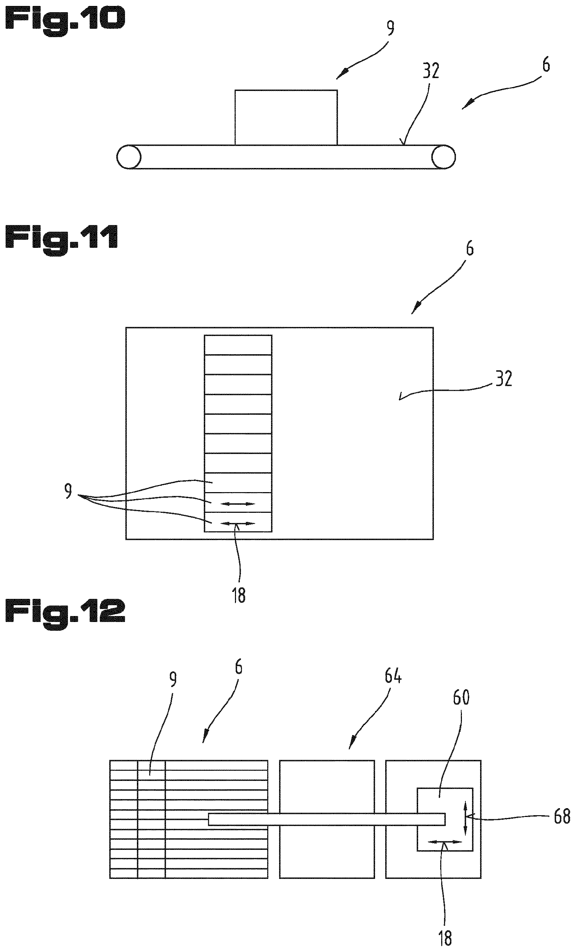

Fig. 10 zeigt ein weiters Ausführungsbeispiel der Ablagevorrichtung 6 zusammen mit der Abrollvorrichtung 9. Wie aus Fig. 10 ersichtlich, kann vorgesehen sein, dass die Ablagefläche 32 der Ablagevorrichtung 6 an einem umlaufenden Band eines Bandförderers ausgebildet ist. Dieses umlaufende Band kann eine luftdurchlässige Oberfläche aufweisen, sodass die Ablagefläche 32 mit Vakuum beaufschlagt werden kann. Die Funktionsweise eines derartigen Förderbandes ist analog zur bereits beschriebenen Funktionsweise des Ablageprofils 37. Insbesondere ist vorgesehen, dass durch Verschiebung der Ablagefläche 32 relativ zur Abrollvorrichtung 9 das Faserband 2 abgerollt wird.

Fig. 11 zeigt eine Draufsicht einer weiteren Ausführungsvariante des Zusammenwirkens zwischen Abrollvorrichtung 9 und Ablagevorrichtung 6. Wie aus Fig. 11 ersichtlich, kann vorgesehen sein, dass eine Relativbewegung zwischen Abrollvorrichtung 9 und Ablagevorrichtung 6 dadurch erreicht wird, dass die einzelnen nebeneinander angeordneten Abrollvorrichtungen 9 unabhängig voneinander in horizontaler Richtung 18 verschoben werden können. Die Ablagefläche 32 der Ablagevorrichtung 6 kann hierbei ortsfest ausgebildet sein.

In einer weiteren Alternativvariante ist es denkbar, dass sowohl die Abrollvorrichtung 9 als auch die Ablagefläche 32 der Ablagevorrichtung 6 in horizontaler Richtung 18 verschiebbar sind.

Wie aus Fig. 1 ersichtlich, kann vorgesehen sein, dass die Manipulationsvorrichtung 7 eine Aufnahmefläche 59 aufweist, mittels welcher die an der Ablagevorrichtung 6 abgelegten und abgelängten Faserbänder 2 aufgenommen und zur Stapelvorrichtung 8 transportiert werden können. Die Aufnahmefläche 59 kann analog zur Ablagefläche 32 luftdurchlässig ausgebildet sein, um ein Fixieren der Faserbänder 2 an der Aufnahmefläche 59 zu ermöglichen. Weiters ist es auch denkbar, dass die Aufnahmefläche 59 in Teilbereiche unterteilt ist, wobei die Teilbereiche selektiv mit Unterdruck beaufschlagbar sind um einen übermäßigen Energieverlust zu vermeiden.

Die Aufnahmefläche 59 kann an einem Aufnahmekopf 60 ausgebildet sein. Weiters ist es denkbar, dass der Aufnahmekopf 60 mit der Aufnahmefläche 59 um eine Hochachse 61 drehbar gelagert ist. Dadurch können die einzelnen Faserbandschichten 3 in verschiedenen Winkeln zueinander an der Stapelvorrichtung 8 abgelegt werden.

Weiters kann vorgesehen sein, dass am Aufnahmekopf 60 zumindest ein Heizelement 62 angeordnet ist, mittels welchem die einzelnen Faserbandschichten 3 zumindest teilweise aufgeschmolzen werden können und somit miteinander verbunden werden können. Das Heizelement 62 kann beispielsweise in Form von Widerstandsheizdrähten ausgebildet sein. In einer Alternativvariante kann vorgesehen sein, dass das Heizelement 62, beispielsweise als Ultraschalleinheit oder etwa als Lasereinheit ausgebildet ist, um die benötigte Energie zum Aufschmelzen der einzelnen Faserbandschichten 3 in das Gelege 4 einbringen zu können.

Weiters kann vorgesehen sein, dass die Manipulationsvorrichtung 7 eine Zuführeinheit 63 aufweist, mittels welcher ein Zusatzstoff, wie etwa ein Harz, zu den einzelnen Faserbandschichten 3 zugeführt werden kann.

Weiters kann vorgesehen sein, dass an der Fertigungsanlage 1 eine Bereitstellungsstation 64 ausgebildet ist, von welcher Zusatzstoffe mittels der Manipulationsvorrichtung 7 aufgenommen und in die Stapelvorrichtung 8 eingebracht werden können.

In einer Ausführungsvariante kann vorgesehen sein, dass, wie in Fig. 1 dargestellt, die Manipulationsvorrichtung 7 eine Linearführung 65 aufweist, mittels welcher der Aufnahmekopf 60 in horizontaler Verschieberichtung 18 verschoben werden kann. Weiters kann vorgesehen sein, dass die Manipulationsvorrichtung 7 eine Hubeinheit 66 aufweist, mittels welcher der Aufnahmekopf 60 in einer vertikalen Verschieberichtung 67 verschoben werden kann.

In einer weiteren Ausführungsvariante entsprechend Fig. 12 kann vorgesehen sein, dass der Aufnahmekopf 60 in einer weiteren horizontalen Verschieberichtung 68 verschoben werden kann, welche im rechten Winkel zur horizontalen Verschieberichtung 18 ausgerichtet ist. Dies kann beispielsweise dadurch realisiert werden, dass die gesamte Linearführung 65 der Manipulationsvorrichtung 7, an welcher der Aufnahmekopf 60 gelagert ist, in der weiteren horizontalen Verschieberichtung 68 verschoben werden kann. Dadurch kann die Flexibilität der Manipulationsvorrichtung 7 erhöht werden, da diese in drei Achsen verschiebbar sein kann.

Wie in Fig. 1 ersichtlich, kann vorgesehen sein, dass die Stapelvorrichtung 8 in Form eines Bandförderers 69 ausgebildet ist, wobei eine Ablagefläche 70 an der Oberfläche eines Fördergurtes 71 ausgebildet ist. Der Fördergurt 71 kann luftdurchlässig ausgebildet sein, um eine an der Ablagefläche 70 abgelegte Faserbandschicht 3 fixieren zu können.

Das Verfahren zum Aufbau des Geleges 4 kann folgende Verfahrensschritte umfassen. Die einzelnen Faserbänder 2 können, wie bereits beschrieben, von der Abrollvorrichtung 9 abgerollt und auf der Ablagevorrichtung 6 aufgenommen werden. Durch das individuelle Verschieben der einzelnen Teilbereiche 35 der Ablagevorrichtung 6 kann die Länge bzw. die Position von nebeneinander abgelegten Faserbändern 2 bestimmt werden, sodass eine Faserbandschicht 3 mit einer frei wählbaren und vorherbestimmten Außenkontur gebildet wird. Diese Faserbandschicht 3 kann anschließend von der Manipulationsvorrichtung 7 aufgenommen werden, um sie zur Stapelvorrichtung 8 weiter transportieren zu können. An der Stapelvorrichtung 8 können einzelne Faserbandschichten 3 zu einem Gelege 4 gestapelt werden. Dabei ist es möglich, dass unterschiedliche Faserbandschichten 3 in einer unterschiedlichen Ausrichtung aufeinander gelegt werden.

Alternativ zu einer Ausführungsvariante in welcher die einzelnen Bauteile zur Aufnahme der Faserbänder 2 mit Unterdruck beaufschlagt werden können, ist es auch denkbar, dass mehrere oder auch nur einzelne der Bauteile elektrostatisch aufgeladen werden können, um ein Anhaften bzw. ein Fixieren des Faserbandes 2 am jeweiligen Bauteil bzw. an der jeweiligen Ablagefläche 32, 70 oder Aufnahmefläche 59 erreichen zu können.

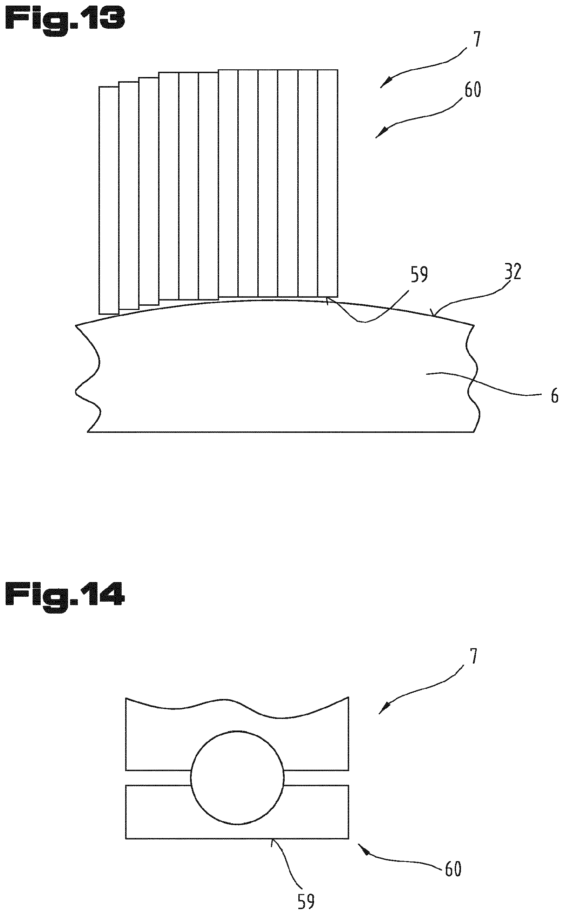

Wie aus Fig. 13 ersichtlich, kann vorgesehen sein, dass die Ablagefläche 32 der Ablagevorrichtung 6 zumindest bereichsweise gekrümmt ist. Dadurch können nicht nur flächige Faserbandschichten 3 und somit Gelege 4 hergestellt werden, sondern auch Gelege 4 mit einer konturierten Oberfläche.

In einer Ausführungsvariante kann beispielsweise vorgesehen sein, dass die Kontur der Ablagefläche 32 fix vorgegeben und nicht verstellbar ist.

In einer weiteren Ausführungsvariante kann auch vorgesehen sein, dass die Kontur der Ablagefläche 32 variabel angepasst werden kann. Dies kann beispielsweise dadurch erreicht werden, dass die Ablagefläche 32 der Ablagevorrichtung 6 segmentiert ist, wobei die einzelnen Segmente unabhängig voneinander verstellbar sein können.

Weiters kann beispielsweise vorgesehen sein, dass die Ablagefläche 32 der Ablagevorrichtung 6 auf einem Fördergurt ausgebildet ist, wobei die Ablagefläche 32 im Ablagebereich eben ist und die Auflage des Fördergurtes in einem weiteren Bereich die Konturierung aufweist. Durch verschieben des Fördergurtes in den weitern Bereich kann somit die Faserbandschicht 3 in ihre gewünschte Form gebracht werden. Insbesondere kann dadurch erreicht werden, dass die einzelnen Faserbänder 2 drapiert werden.

Weiters kann vorgesehen sein, dass eine Aufnahmefläche 59 der Manipulationsvorrichtung 7 ebenfalls konturiert ist, um eine konturierte Faserbandschicht 3 aufnehmen zu können.

Insbesondere kann hierbei vorgesehen sein, dass der Aufnahmekopf 60 der Manipulationsvorrichtung 7 in Segmente unterteilt ist. Dadurch kann sich der Aufnahmekopf 60 variabel an die Form der Faserbandschicht 3 anpassen bzw. angepasst werden.

In einer nicht dargestellten Ausführungsvariante kann vorgesehen sein, dass die einzelnen Segmente des Aufnahmekopfes 60 mit einer gemeinsamen Überspannung überzogen sind, welche die Aufnahmefläche 59 ausbildet. Dadurch kann eine Glättung der Aufnahmefläche 59 erreicht werden.

In einer weiteren Ausführungsvariante nach Fig. 14 kann vorgesehen sein, dass die einzelnen Segmente des Aufnahmekopfes 60 eine flexible Lagerung aufweisen an welcher die Aufnahmefläche 59 ausgebildet ist. Dadurch kann erreicht werden dass sich die einzelnen Segmente an die Oberflächenkontur der Faserbandschicht 3 anpassen können.

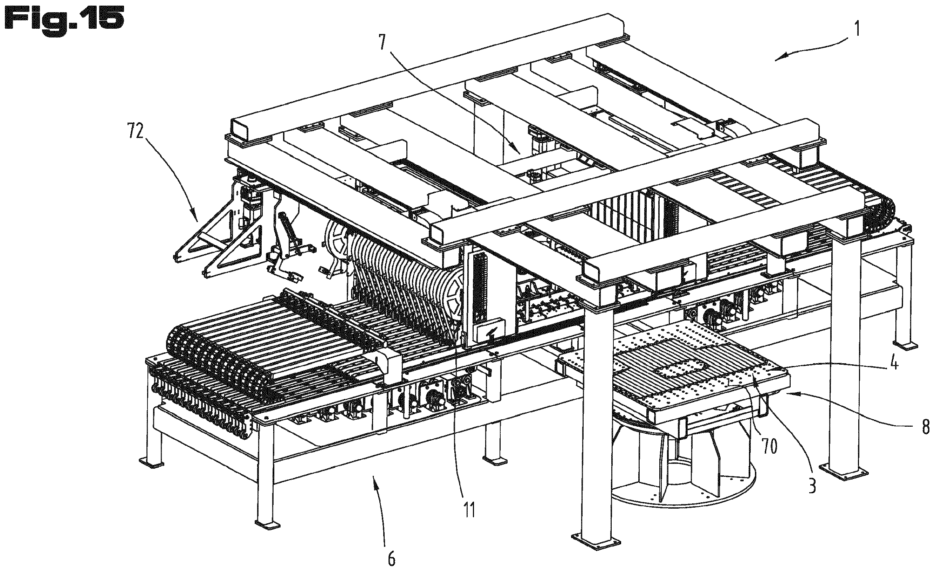

In den Figuren 15 bis 17 ist eine weitere und gegebenenfalls für sich eigenständige Ausführungsform der Fertigungsanlage 1 gezeigt, wobei wiederum für gleiche Teile gleiche Bezugszeichen bzw. Bauteilbezeichnungen wie in den vorangegangenen Figuren 1 bis 14 verwendet werden. Um unnötige Wiederholungen zu vermeiden, wird auf die detaillierte Beschreibung in den vorangegangenen Figuren 1 bis 14 hingewiesen bzw. Bezug genommen.

In der Fig. 15 ist in einer perspektivischen Ansicht eine weitere Ausführungsform der Fertigungsanlage 1 dargestellt. Wie aus Fig. 15 ersichtlich, kann vorgesehen sein, dass die Manipulationsvorrichtung 7 zum Übertragen einer Faserbandschicht 3 auf die Stapelvorrichtung 8 an einem Portal angeordnet ist. Hierbei kann vorgesehen sein, dass die Stapelvorrichtung 8 neben der Ablagevorrichtung 6 angeordnet ist. Die Stapelvorrichtung 8 kann einen Drehtisch aufweisen, sodass dessen Ablagefläche 70 relativ zur Manipulationsvorrichtung 7 verdrehbar ausgebildet ist. Somit muss nicht die Manipulationsvorrichtung 7 zum Übereinanderstapeln von einzelnen Faserbandschichten 3 drehbar ausgeführt sein.

Die Fertigungsanlage 1 kann darüber hinaus eine Rollenwechselvorrichtung 72 aufweisen, welche zum Wechseln der Rohmaterialrollen 11 dient.

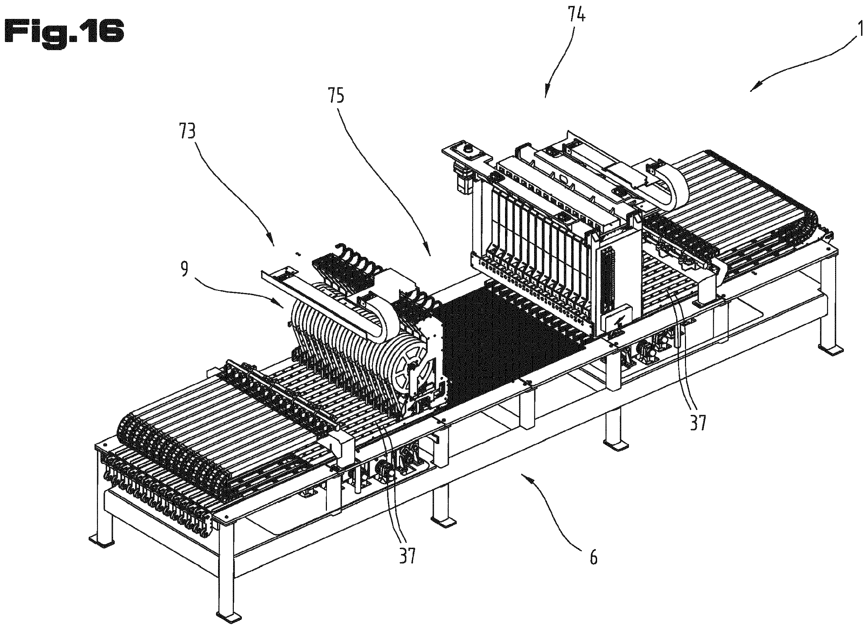

Fig. 16 zeigt eine weitere schematische Darstellung der Fertigungsanlage 1, wobei in dieser Figur zur besseren Übersicht die Manipulationsvorrichtung 7 mitsamt dessen Montagesystem nicht dargestellt ist.

Wie in Fig. 16 ersichtlich kann vorgesehen sein, dass die Ablagevorrichtung 6 eine erste Maschinenseite 73 und eine zweite Maschinenseite 74 mit jeweils mehreren Ablageprofilen 37 und damit korrespondierenden Abrollvorrichtungen 9 aufweist. Die Ablageprofile 37 der ersten Maschinenseite 73 und die Ablageprofile 37 der zweiten Maschinenseite 74 sind derart zueinander angeordnet, dass sie kämmend ineinandergeschoben werden können. Mit anderen Worten ausgedrückt kann daher zwischen zwei Ablageprofilen 37 der ersten Maschinenseite 73 ein Ablageprofil 37 der zweiten Maschinenseite 74 eingeschoben werden. Daher sind pro Maschinenseite 73, 74 die Ablageprofile 37 jeweils in einem Abstand zueinander angeordnet, welcher zumindest so groß ist, wie die Breite 36 der Ablageprofile 37.

Wenn sich die Fertigungsanlage 1 in einer Stellung, wie sie in Fig. 16 dargestellt ist, befindet und daher die einzelnen Ablageprofile 37 jeweils unter den Abrollvorrichtungen 9 positioniert sind, kann das Faserband 3 auf den Ablageprofilen 37 positioniert werden. Anschließend können die einzelnen Ablageprofile 37 in die Maschinenmitte 75 verschoben werden, wo sie kämmend ineinandergreifen und dort die fertige Faserbandschicht 3 bilden, welche mittels der Manipulationsvorrichtung 7 abgenommen werden kann. Jedes zweite Faserband 2 der Faserbandschicht 3 wird daher an der ersten Maschinenseite 73 und die dazwischenliegenden Faserbänder 2 der Faserbandschicht 3 an der zweiten Maschinenseite 74 gelegt.

Die einzelnen Ablageprofile 37 können mittels Linearführungen verschiebbar an der Ablagevorrichtung 6 angeordnet sein. Weiters können einzelne Stellantriebe vorgesehen sein, welche zum Positionieren der Ablageprofile 37 dienen.

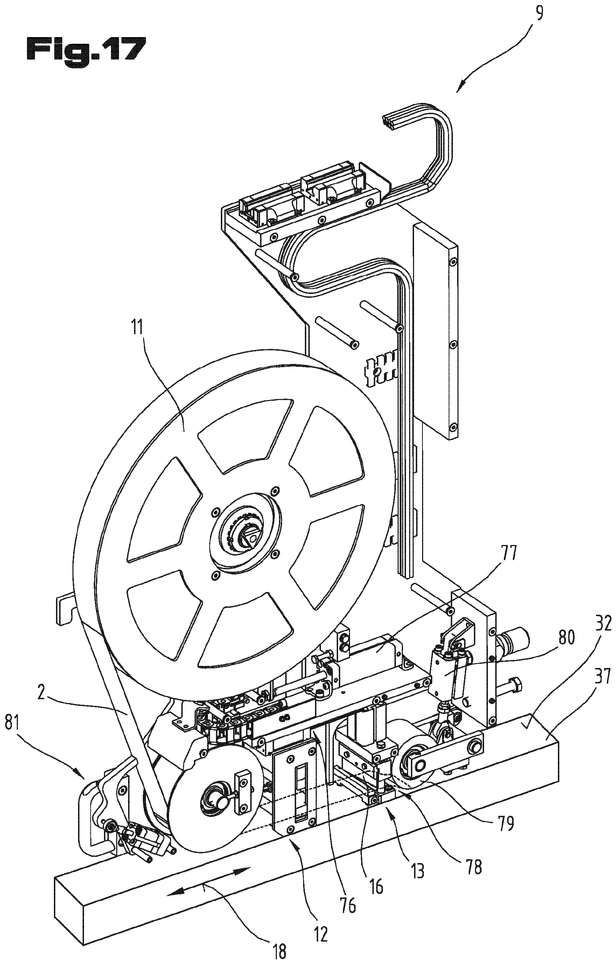

In der Fig. 17 ist ein weiteres Ausführungsbeispiel der Abrollvorrichtung 9 dargestellt. Ein derartiger Aufbau der Abrollvorrichtung 9 ist mit verschiedenartig aufgebauten Fertigungsanlagen 1, wie sie in den Figuren 1 und 2 bzw, in den Figuren 15 und 16 beschrieben ist, kombinierbar.

Wie aus Fig. 17 ersichtlich kann vorgesehen sein, dass die Klemmeinheit 12 der Abrollvorrichtung 9 an einer Linearführung 76 angeordnet ist und dadurch in einer horizontalen Richtung 18 relativ zur Schneideinheit 13 verschiebbar an der Abrollvorrichtung 9 angeordnet ist. Weiters kann ein Aktor 77 ausgebildet sein, welcher vom horizontalen Verschieben der Klemmeinheit 12 dient. Der Aktor 77 kann beispielsweise in Form eines Pneumatikzylinders ausgebildet sein. Mittels der Klemmeinheit 12 kann das Faserband 2 über die Schneideinheit 13 hinausgeschoben werden, wodurch ein freistehendes Ende 78 gebildet wird, welches an der Ablagefläche 32 fixiert werden kann.

Weiters kann vorgesehen sein, dass eine Niederhalterolle 79 ausgebildet ist, mittels welcher das freistehende Ende 78 des Faserbandes 2 an der Ablagefläche 32 der Ablagevorrichtung 6 angedrückt werden kann. Weiters kann vorgesehen sein, dass die Niederhalterolle 79, mittels einem Aktor 80 aktiv an die Ablagefläche 32 anpressbar ist bzw. von dieser abgehoben werden kann.

Weiters kann eine Rollenwechselklemmung 81 ausgebildet sein, mittels welcher das Faserband 2 beim automatischen Wechseln der Rohmaterialrolle 11 geklemmt werden kann.

Anhand der Figuren 15-17 wird nun der mögliche Ablauf zum Bilden eines Geleges 4 aus einzelnen Faserbändern 2 beschrieben. Am Beginn dieses Verfahrens ist das Faserband 2 in der Klemmeinheit 12 geklemmt und wurde zuvor mit der Schneideinheit 13 abgeschnitten. Das Faserband 2 ist daher bündig mit dem Schneidmesser 16 der Schneideinheit 13. Das Ablageprofil 37 befindet sich in einer zur Aufnahme bereiten Aufnahmestellung und die Niederhalterolle 79 ist von der Ablagefläche 32 abgehoben.

In einem ersten Verfahrensschritt wird die Klemmeinheit 12 in der horizontalen Richtung 18 zur Schneideinheit 13 hin verschoben, wodurch das Faserband 2 von der Rohmaterialrolle 11 abgezogen wird und über die Schneideinheit 13 hinaus verschoben wird, sodass sich ein freistehendes Ende 78 des Faserbandes 2 bildet. Das freistehende Ende 78 des Faserbandes 2 wird hierbei unter die Niederhalterolle 79 hineinverschoben. Mit anderen Worten ausgedrückt wird das freistehende Ende 78 des Faserbandes 2 zwischen der Niederhalterolle 79 und der Ablagefläche 32 positioniert.

In einem anschließenden Verfahrensschritt wird die Niederhalterolle 79 in Richtung der Ablagefläche 32 bewegt, sodass das freistehende Ende 78 des Faserbandes 2 zwischen der Niederhalterolle 79 und der Ablagefläche 32 geklemmt wird. Zusätzlich wird gleichzeitig an der Ablagefläche 32 ein Unterdruck aufgebracht, sodass das freistehende Ende 78 des Faserbandes 2 an die Ablagefläche 32 angesaugt wird und an dieser fixiert wird.

In einem weiteren Verfahrensschritt wird die Klemmung der Klemmeinheit 12 gelöst und das Faserband 2 kann mittels der Ablagefläche 32 bzw. dem Ablageprofil 37 von der Rohmaterialrolle 11 abgezogen werden.

Zum Abziehen des Faserbandes 2 von der Rohmaterialrolle 11 werden die Ablagefläche 32 und die Abrollvorrichtung 9 relativ zueinander verschoben, wobei durch die Klemmung des Faserbandes 2 an der Ablagefläche 32 durch das verschieben das Faserband 2 von der Rohmaterialrolle 11 abgezogen wird. Hierbei kann vorgesehen sein, dass die Rohmaterialrolle 11 gebremst ist, sodass das Faserband 2, welches sich auf der Rohmaterialrolle 11 befindet, sich nicht lockert.

Beim Verschieben der Ablagefläche 32 relativ zur Abrollvorrichtung 9 ist es beispielsweise möglich, dass die Ablagefläche 32 stillsteht und die Abrollvorrichtung 9 bewegt wird. Weiters ist es auch denkbar, dass wie im vorliegenden Ausführungsbeispiel die Abrollvorrichtung 9 stillsteht und die Ablagefläche 32 am Ablageprofil 37 ausgebildet ist, welches relativ zur Abrollvorrichtung 9 verschoben wird.

In Fig. 16 ist besonders gut ersichtlich, dass zum Ablegen der Faserbänder 2 an den einzelnen Ablageprofilen 37 diese in Richtung zur Maschinenmitte 75 verschoben werden. Die einzelnen Ablageprofile 37 werden hierbei so weit in Richtung Maschinenmitte 75 verschoben, bis eine ausreichende Länge des Faserbandes 2 von der Rohmaterialrolle 11 abgezogen und an der Ablagefläche 32 positioniert ist.

Anschließend wird das Faserband 2 erneut mittels der Klemmeinheit 12 geklemmt und mittels der Schneideinheit 13 abgeschnitten.

In einem anschließenden Verfahrensschritt werden die einzelnen Ablageprofile 37 so weit in Richtung Maschinenmitte 75 verschoben, bis in der Maschinenmitte 75 abwechselnd ein Ablageprofil 37 der ersten Maschinenseite 73 und ein Ablageprofil 37 der zweiten Maschinenseite 74 angeordnet sind. Durch die Summe der einzelnen auf den Ablageprofilen 37 angeordneten Faserbändern 2 wird die Faserbandschicht 3 gebildet.

Anschließend kann, wie aus Fig. 15 ersichtlich, die Faserbandschicht 3 mittels der Manipulationsvorrichtung 7 von der Maschinenmitte 75 abgenommen werden und zur Stapelvorrichtung 8 transportiert werden, wo die einzelnen Faserbandschichten 3 zu einem Gelege 4 übereinandergelegt werden. Während diesem Verfahrensschritt können die einzelnen Ablageprofile 37 wieder in ihre Aufnahmestellung zurückbefördert werden.

Zum Aufbau von verschieden ausgerichteten Faserbandschichten 3 an der Stapelvorrichtung 8 kann die Ablagefläche 70 der Stapelvorrichtung 8 nach Aufnahme einer Faserbandschicht 3 um eine vertikale Achse verdreht werden, um eine neue Faserbandschicht 3 aufnehmen zu können.

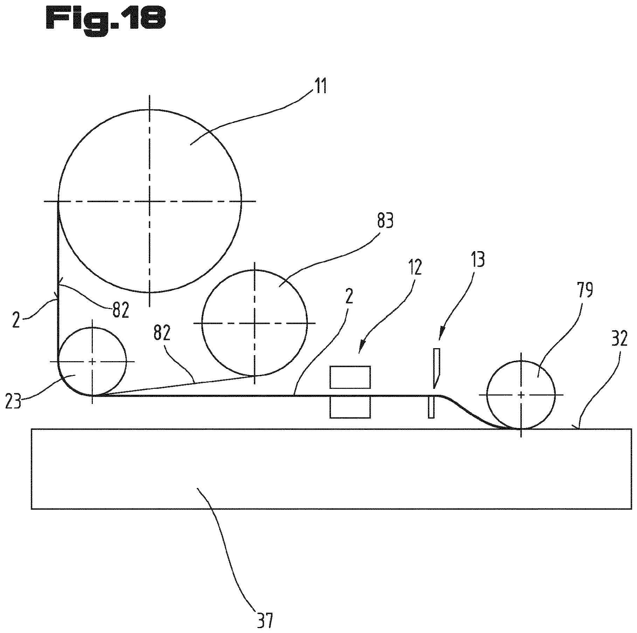

In der Figur 18 ist eine weitere und gegebenenfalls für sich eigenständige Ausführungsform der Fertigungsanlage 1 gezeigt, wobei wiederum für gleiche Teile gleiche Bezugszeichen bzw. Bauteilbezeichnungen wie in den vorangegangenen Figuren 1 bis 17 verwendet werden. Um unnötige Wiederholungen zu vermeiden, wird auf die detaillierte Beschreibung in den vorangegangenen Figuren 1 bis 17 hingewiesen bzw. Bezug genommen.

Wie aus Fig. 18 erichtlich kann vorgesehen sein, dass ein Trennband 82 vorgesehen ist, welches am Faserband 2 und daher gemeinsam mit dem Faserband 2 an der Rohmaterialrolle 11 aufgewickelt ist. Das Trennband 82 liegt im aufgewickelten Zustand zwischen den einzelnen Schichten des auf der Rohmaterialrolle 11 aufgewickelten Faserbandes 2. Weiters kann vorgesehen sein, dass die Fertigungsanlage 1 eine Trennbandrolle 83 umfasst, welche zum Aufwickeln des Trennbandes 82 dient. Insbesondere kann vorgesehen sein, dass die Trennbandrolle 83 mittels eines Drehantriebes angetrieben ist und daher das Trennband 82 mitsamt dem daran anhaftenden Faserband 2 aktiv von der Rohmaterialrolle 11 abgezogen werden kann. Insbesondere kann dadurch erreicht werden, dass der Vorschub des Faserbandes 2 während dem Verschieben der Ablagefläche 32 durch die Trennbandrolle 83 unterstützt bzw. zur Gänze durch die Trennbandrolle 83 übernommen wird.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Fertigungsanlage | 31 | tatsächliche Breite Abrollvorrichtung |
| 2 | Faserband | | |
| 3 | Faserbandschicht | 32 | Ablagefläche Ablagevorrichtung |
| 4 | Gelege | 33 | Längserstreckung der Ablagefläche der Ablagevorrichtung |
| 5 | Legevorrichtung | | |
| 6 | Ablagevorrichtung | 34 | Breite der Ablagevorrichtung |
| 7 | Manipulationsvorrichtung | 35 | Teilbereich Ablagefläche |
| 8 | Stapelvorrichtung | 36 | Breite Teilbereich |
| 9 | Abrollvorrichtung | 37 | Ablageprofil |
| 10 | Aufnahmevorrichtung | 38 | Linearführung |
| 11 | Rohmaterialrolle | 39 | Grundgestell |
| 12 | Klemmeinheit | 40 | Führungsschiene |
| 13 | Schneideinheit | 41 | Führungsschlitten |
| 14 | Klemmbacken | 42 | Grundstellung |
| 15 | Gegenhalter | 43 | Schnittfläche Faserband |
| 16 | Schneidmesser | 44 | Stirnfläche Ablageprofil |
| 17 | Gegenhalter | 45 | Durchtrittsöffnung |
| 18 | horizontale Richtung | 46 | Vorrichtung zum Erzeugen von Unterdruck |
| 19 | Schneidstellung | | |
| 20 | Abrollstellung | 47 | Zahnriemen |
| 21 | Bandansatz | 48 | erster Endabschnitt Zahnriemen |
| 22 | Umlenkrollenanordnung | 49 | erster Endabschnitt Ablageprofil |
| 23 | Umlenkrolle | 50 | zweiter Endabschnitt Zahnriemen |
| 24 | Breite Faserband | 51 | zweiter Endabschnitt Ablageprofil |
| 25 | Bandstärke | 52 | Antriebseinheit |
| 26 | optische Einheit | 53 | erste Umlenkeinheit |
| 27 | Reihe | 54 | zweite Umlenkeinheit |
| 28 | Abrollrichtung | 55 | Befestigungsbacken |
| 29 | Führungsschiene | 56 | Längsteilbereich |
| 30 | Modulbreite Abrollvorrichtung | 57 | Zahnstange |
| 58 | Ritzel | | |
| 59 | Aufnahmefläche | | |
| 60 | Aufnahmekopf | | |
| 61 | Hochachse | | |
| 62 | Heizelement | | |
| 63 | Zuführeinheit | | |
| 64 | Bereitstellungsstation | | |
| 65 | Linearführung Manipulationsvorrichtung | | |
| 66 | Hubeinheit | | |
| 67 | vertikale Verschieberichtung | | |
| 68 | weitere horizontale Verschieberichtung | | |
| 69 | Bandförderer | | |
| 70 | Ablagefläche | | |
| 71 | Fördergurt | | |
| 72 | Rollenwechselvorrichtung | | |
| 73 | erste Maschinenseite | | |
| 74 | zweite Maschinenseite | | |
| 75 | Maschinenmitte | | |
| 76 | Linearführung Klemmeinheit | | |
| 77 | Aktor Klemmeinheit | | |
| 78 | freistehendes Ende | | |
| 79 | Niederhalterolle | | |
| 80 | Aktor Niederhalterolle | | |
| 81 | Rollenwechselklemmung | | |
| 82 | Trennband | | |
| 83 | Trennbandrolle | | |

## Patentansprüche

1. Fertigungsanlage (1) zum Legen von Faserbändern (2), die Fertigungsanlage (1) umfassend:
- eine Legevorrichtung (5) mit zumindest zwei Abrollvorrichtungen (9), welche Abrollvorrichtungen (9) jeweils eine Aufnahmevorrichtung (10) zur Aufnahme einer Rohmaterialrolle (11), eine Schneideinheit (13) zum Schneiden des Faserbandes (2) und eine Klemmeinheit (12) zum Fixieren eines auf der Rohmaterialrolle (11) befindlichen Faserbandes (2) umfassen;
- eine Ablagevorrichtung (6) mit einer Ablagefläche (32) zur Aufnahme des von der Rohmaterialrolle (11) abgerollten Faserbandes (2), wobei die Ablagefläche (32) der Ablagevorrichtung (6) und die Abrollvorrichtung (9) der Legevorrichtung (5) zueinander in Längserstreckung (33) der Ablagefläche (32) relativverschiebbar sind, wodurch das Faserband (2) streifenweise auf die Ablagefläche (32) abrollbar ist,
wobei
die Ablagefläche (32) der Ablagevorrichtung (6) über die Breite (34) der Ablagevorrichtung (6) gesehen in zumindest zwei Teilbereiche (35) unterteilt ist, wobei jeder der Teilbereiche (35) einer Abrollvorrichtung (9) zugeordnet ist und wobei die zumindest zwei Teilbereiche (35) der Ablagefläche (32) und die jeweils zugehörige Abrollvorrichtung (9) der Legevorrichtung (5) unabhängig von der weiteren Abrollvorrichtung (9) und des weiteren Teilbereiches (35) zueinander in Längserstreckung (33) der Ablagefläche (32) relativverschiebbar sind,
**dadurch gekennzeichnet, dass**
die Schneideinheit (13) und/oder die Klemmeinheit (12) mittels einer Linearführung (76) verschiebbar an der Abrollvorrichtung (9) gelagert sind und dadurch die Schneideinheit (13) und die Klemmeinheit (12) zueinander relativverschiebbar sind.

2. Fertigungsanlage nach Anspruch 1, **dadurch gekennzeichnet, dass** eine Manipulationsvorrichtung (7) zum Manipulieren des auf der Ablagevorrichtung (6) abgelegten Faserbandes (2) ausgebildet ist, wobei die Manipulationsvorrichtung (7) eine Aufnahmefläche (59) zur Aufnahme des Faserbandes (2) aufweist mittels welcher das auf der Ablagefläche (32) abgelegte Faserband (2) von der Manipulationsvorrichtung (7) aufnehmbar und zu einem weiteren Anlagenteil transferierbar ist.

3. Fertigungsanlage nach Anspruch 2, **dadurch gekennzeichnet, dass** eine Stapelvorrichtung (8) mit einer Ablagefläche (70) zur Aufnahme des Faserbandes (2) ausgebildet ist an welcher das von der Manipulationsvorrichtung (7) transferierte Faserband (2) stapelbar ist, wobei die Stapelvorrichtung (8) baulich von der Ablagevorrichtung (6) distanziert ist.

4. Fertigungsanlage nach Anspruch 3, **dadurch gekennzeichnet, dass** die Ablagefläche (70) der Stapelvorrichtung (8) luftdurchlässig ausgebildet ist und mit Unterdruck beaufschlagbar ist, wodurch das auf der Ablagefläche (70) abgelegte Faserband (2) auf dieser fixierbar ist.

5. Fertigungsanlage nach einem der vorhergehenden Ansprüche, **dadurch gekennzeichnet, dass** die Ablagefläche (32) der Ablagevorrichtung (6) luftdurchlässig ausgebildet ist und mit Unterdruck beaufschlagbar ist, wodurch das Faserband (2) auf der Ablagefläche (32) fixierbar ist.

6. Fertigungsanlage nach einem der vorhergehenden Ansprüche, **dadurch gekennzeichnet, dass** die Aufnahmefläche (59) der Manipulationsvorrichtung (7) luftdurchlässig ausgebildet ist und mit Unterdruck beaufschlagbar ist, wodurch das Faserband (2) an der Aufnahmefläche (59) fixierbar ist.

7. Fertigungsanlage nach einem der vorhergehenden Ansprüche, **dadurch gekennzeichnet, dass** die Schneideinheit (13) parallel zur Ablagefläche (32) der Ablagevorrichtung (6) zwischen einer vorgeschobenen Schneidstellung (19) und einer zurückgezogenen Abrollstellung (20) verschiebbar ist.

8. Fertigungsanlage nach Anspruch 7, **dadurch gekennzeichnet, dass** die Schneideinheit (13) der Abrollvorrichtung (9) als Guillotine ausgebildet ist, wobei die Schneideinheit (13) ein Schneidmesser (16) und einen Gegenhalter (17) umfasst.

9. Fertigungsanlage nach einem der vorhergehenden Ansprüche, **dadurch gekennzeichnet, dass** mehrere Abrollvorrichtungen (9) in Reihen (27) an der Legevorrichtung (5) angeordnet sind.

10. Fertigungsanlage nach Anspruch 9, **dadurch gekennzeichnet, dass** die Legevorrichtung (5) eine Führungsschiene (29) umfasst an welcher die Abrollvorrichtungen (9) reihenweise angeordnet sind, wobei mittels der Führungsschiene (29) jeweils eine Reihe (27) der Abrollvorrichtungen (9) seitlich aus der Legevorrichtung (5) ausziehbar ist.

11. Fertigungsanlage nach einem der vorhergehenden Ansprüche, **dadurch gekennzeichnet, dass** die Abrollvorrichtungen (9) eine Modulbreite (30) aufweisen, welche der Breite (24) des Faserbandes (2) entspricht, wobei bei reihenweiser Anordnung der Abrollvorrichtungen (9) in mehreren Reihen (27) die Abrollvorrichtungen (9) in einem n-fachen Abstand der Modulbreite (30) zueinander angeordnet sind, wobei der Zähler n der Anzahl der Reihen (27) -1 entspricht.

12. Fertigungsanlage nach einem der vorhergehenden Ansprüche, **dadurch gekennzeichnet, dass** die zumindest zwei Teilbereiche (35) der Ablagefläche (32) der Ablagevorrichtung (6) unabhängig voneinander in Längserstreckung (33) der Ablagefläche (32) relativverschiebbar sind und dass die Abrollvorrichtungen (9) bezüglich der Längserstreckung (33) der Ablagefläche (32) ortsfest an der Legevorrichtung (5) angeordnet sind.

13. Fertigungsanlage nach einem der vorhergehenden Ansprüche, **dadurch gekennzeichnet, dass** jeder Teilbereich (35) der Ablagefläche (32) der Ablagevorrichtung (6) an einem eigenen Ablageprofil (37) angeordnet ist, welche in einer horizontalen Richtung (18) relativ zu einem Grundgestell (39) der Ablagevorrichtung (6) verschiebbar sind, wobei das Ablageprofil (37) mittels einer Linearführung (38) mit dem Grundgestell (39) gekoppelt ist.

14. Fertigungsanlage nach Anspruch 13, **dadurch gekennzeichnet, dass** das Ablageprofil (37) an einen Zahnriemen (47) gekoppelt ist, wobei ein erster Endabschnitt (48) des Zahnriemens (47) an einen ersten Endabschnitt (49) des Ablageprofils (37) gekoppelt ist und ein zweiter Endabschnitt (50) des Zahnriemens (47) an einen zweiten Endabschnitt (51) des Ablageprofils (37) gekoppelt ist und das Ablageprofil (37) und der Zahnriemen (47) eine Endlosschlaufe bilden, wobei der Zahnriemen (47) mit einer Antriebseinheit (52) in Eingriff steht.

15. Fertigungsanlage nach einem der vorhergehenden Ansprüche, **dadurch gekennzeichnet, dass** eine Breite (36) eines Teilbereiches (35) der Ablagefläche (32) der Ablagevorrichtung (6) gleich groß oder geringfügig kleiner ist als die Breite (24) des zu verarbeitenden Faserbandes (2).

16. Fertigungsanlage nach einem der vorhergehenden Ansprüche, **dadurch gekennzeichnet, dass** in der Ablagefläche (32) der Ablagevorrichtung (6) Durchtrittsöffnungen (45) angeordnet sind, welche luftdurchlässig sind und mit einer Vorrichtung zum Erzeugen von Unterdruck (46) gekoppelt sind.

17. Fertigungsanlage nach einem der Ansprüche 5 bis 17, **dadurch gekennzeichnet, dass** die Teilbereiche (35) der Ablagefläche (32) der Ablagevorrichtung (6) in Längserstreckung (33) gesehen in Längsteilbereiche (56) unterteilt sind, wobei die Längsteilbereiche (56) selektiv mit Unterdruck beaufschlagbar sind.

18. Fertigungsanlage nach einem der vorhergehenden Ansprüche, **dadurch gekennzeichnet, dass** die Aufnahmefläche (59) der Manipulationsvorrichtung (7) um ihre Hochachse (61) drehbar gelagert ist.

19. Fertigungsanlage nach einem der vorhergehenden Ansprüche, **dadurch gekennzeichnet, dass** die Manipulationsvorrichtung (7) ein Heizelement (62) aufweist, welches in die Aufnahmefläche (59) integriert ist oder auf diese wirkt.

20. Fertigungsanlage nach einem der vorhergehenden Ansprüche, **dadurch gekennzeichnet, dass** die Manipulationsvorrichtung (7) eine Zuführeinheit (63) zum Zuführen eines Zusatzstoffes, wie etwa eines Harzes, aufweist.

21. Fertigungsanlage nach einem der Ansprüche 1 bis 21, **dadurch gekennzeichnet, dass** die Stapelvorrichtung (8) einen Bandförderer (69) umfasst, wobei die Ablagefläche (70) an einem endlos umlaufenden Fördergurt (71) des Bandförderers (69) ausgebildet ist.

22. Fertigungsanlage nach einem der vorhergehenden Ansprüche, **dadurch gekennzeichnet, dass** eine Bereitstellungsstation (64) ausgebildet ist, von welcher mittels der Manipulationsvorrichtung (7) eine Zusatzlage, wie etwa eine bereitgestellte Verstärkungsmatte, aufnehmbar und zur Ablagevorrichtung (6) oder zur Stapelvorrichtung (8) transferierbar ist.

23. Fertigungsanlage nach einem der vorhergehenden Ansprüche, **dadurch gekennzeichnet, dass** die Ablagefläche (32) der Ablagevorrichtung (6) zumindest bereichsweise gekrümmt ist.

24. Fertigungsanlage nach einem der vorhergehenden Ansprüche, **dadurch gekennzeichnet, dass** die Aufnahmefläche (59) der Manipulationsvorrichtung (7) zumindest bereichsweise gekrümmt ist, wobei die Aufnahmefläche (59) insbesondere in mehrere Teilbereiche unterteilt ist, welche zueinander verschiebbar sind, wodurch die Krümmung der Aufnahmefläche (59) verstellbar ist.

25. Fertigungsanlage nach einem der vorhergehenden Ansprüche, **dadurch gekennzeichnet, dass** eine Niederhalterrolle (79) ausgebildet ist, mittels welcher das Faserband (2) an die Ablagefläche (32) der Ablagevorrichtung (6) andrückbar ist.

26. Fertigungsanlage nach einem der vorhergehenden Ansprüche, **dadurch gekennzeichnet, dass** die Ablagevorrichtung (6) eine erste Maschinenseite (73) mit mehreren Ablageprofilen (37) und damit korrespondierenden Abrollvorrichtungen (9) aufweist und eine zweite Maschinenseite (74) mit mehreren Ablageprofilen (37) und damit korrespondierenden Abrollvorrichtungen (9) aufweist, wobei die Ablageprofile (37) der ersten Maschinenseite (73) und die Ablageprofile (37) der zweiten Maschinenseite (74) derart verschiebbar sind, dass sie in einer Maschinenmitte (75) kämmend ineinander greifen.

27. Verfahren zum Legen von Faserbändern (2), insbesondere unter Verwendung einer Fertigungsanlage (1) nach einem der vorhergehenden Ansprüche, wobei das Verfahren die folgenden Verfahrensschritte umfasst:
- Bereitstellen eines Faserbandes (2) auf einer Legevorrichtung (5) mit mehreren Abrollvorrichtungen (9), welche Abrollvorrichtungen (9) jeweils eine Aufnahmevorrichtung (10) zur Aufnahme einer Rohmaterialrolle (11), eine Schneideinheit (13) zum Schneiden des Faserbandes (2) und eine Klemmeinheit (12) zum Fixieren eines auf der Rohmaterialrolle (11) befindlichen Faserbandes (2) umfassen;
- Aufbringen des Faserbandes (2) auf eine Ablagefläche (32) einer Ablagevorrichtung (6) und fixieren des Faserbandes an der Ablagefläche (32), wobei die Ablagefläche (32) der Ablagevorrichtung (6) über die Breite (34) der Ablagevorrichtung (6) gesehen in zumindest zwei Teilbereiche (35) unterteilt ist und jeder der Teilbereiche (35) einer Abrollvorrichtung (9) zugeordnet ist und wobei die zumindest zwei Teilbereiche (35) der Ablagefläche (32) und die jeweils zugehörige Abrollvorrichtung (9) der Legevorrichtung (5) unabhängig von der weiteren Abrollvorrichtung (9) und des weiteren Teilbereiches (35) zueinander in Längserstreckung (33) der Ablagefläche (32) relativverschiebbar sind;
- Abrollen des Faserbandes (2) durch zueinander relativverschieben je eines Teilbereiches (35) der Ablagefläche (32) der Ablagevorrichtung (6) und der zugehörigen Abrollvorrichtung (9) der Legevorrichtung (5), wobei das Faserband (2) an der Ablagefläche (32) fixiert ist, wodurch das Faserband (2) durch Zug der Ablagefläche (32) am Faserband (2) streifenweise auf die Ablagefläche (32) abgerollt wird;
- Ablängen des Faserbandes (2) mittels der Schneideinheit (13) der Abrollvorrichtung (9), **dadurch gekennzeichnet, dass** die Klemmeinheit und/oder die Schneideinheit verschoben werden, wodurch ein in der Klemmeinheit (12) geklemmtes Faserband über die Schneideinheit (13) hinaus nach vor geschoben wird, um ein freistehendes Ende zu bilden, welches an der Ablagefläche (32) fixiert wird, um mittels der Ablagefläche (32) von der Rohmaterialrolle (11) abgezogen zu werden.

28. Verfahren nach Anspruch 27, **dadurch gekennzeichnet, dass** nach dem Ablängen des Faserbandes (2) die folgenden Verfahrensschritte durchgeführt werden:
- Aufnehmen des abgelängten Faserbandes (2) mittels einer Manipulationsvorrichtung (7) zum Manipulieren des auf der Ablagevorrichtung (6) abgelegten Faserbandes (2);
- Transferieren des Faserbandes (2) von der Ablagevorrichtung (6) zu einer Stapelvorrichtung (8);
- Ablegen des Faserbandes (2) an einer Ablagefläche (70) der Stapelvorrichtung (8);
- Heranfördern der nächsten Faserbandschicht (3) und aufeinander stapeln der Faserbandschichten (3).

29. Verfahren nach Anspruch 28, **dadurch gekennzeichnet, dass** die Ablagefläche (70) an der Stapelvorrichtung (8) zur Aufnahme des Faserbandes (2) luftdurchlässig ausgebildet ist und mit Unterdruck beaufschlagt wird, wodurch das auf der Ablagefläche (70) abgelegte Faserband (2) auf dieser fixiert wird.

30. Verfahren nach einem der Ansprüche 27 bis 29, **dadurch gekennzeichnet, dass** das Faserband (2) von einer Aufnahmefläche (59) der Manipulationsvorrichtung (7) dadurch aufgenommen wird, dass diese luftdurchlässig ausgebildet ist und mit Unterdruck beaufschlagt wird, wobei zur Übergabe des Faserbandes (2) von der Ablagevorrichtung (6) auf die Manipulationsvorrichtung (7) ein an der Ablagevorrichtung (6) anliegender Unterdruck abgeschalten wird.

31. Verfahren nach einem der Ansprüche 27 bis 30, **dadurch gekennzeichnet, dass** mehrere der Abrollvorrichtungen (9) nebeneinander angeordnet sind, wobei die Abrollvorrichtungen (9) ortsfest mit der Legevorrichtung (5) verbunden sind und die Ablageflächen (32) der Ablagevorrichtung (6) an mehreren parallel zueinander liegenden Ablageprofilen (37) ausgebildet sind, wobei ein Muster von Faserbändern (2) dadurch gebildet wird, dass die einzelnen Ablageprofile (37) unabhängig voneinander in einer Längserstreckung (33) der Ablagefläche (32) verschoben werden und dadurch die jeweiligen Faserbänder (2) von den Rohmaterialrollen (11) abgezogen werden.

32. Verfahren nach einem der Ansprüche 27 bis 31, **dadurch gekennzeichnet, dass** zum Abschneiden des Faserbandes (2) die Schneideinheit (13) der Abrollvorrichtung (9) in einer vorgeschobenen Schneidstellung (19) betätigt wird und das Faserband (2) mittels der Klemmeinheit (12) geklemmt wird und nach dem Abschneiden des Faserbandes (2) die Schneideinheit (13) und/oder die Klemmeinheit (12) relativ zueinander zusammen verschoben werden, sodass ein Anschnitt des Faserbandes (2) gegenüber der Schneideinheit (13) vorstehend verschoben werden.

33. Verfahren nach einem der Ansprüche 27 bis 32, **dadurch gekennzeichnet, dass** zum Fixieren des freistehenden Ende des Faserbandes (2) an der Ablagefläche (32) der Ablagevorrichtung (6) ein Vakuum an der Ablagefläche (32) aufgebracht wird und/oder eine Niederhalterolle (79) auf das Faserband (2) gedrückt wird.

## Claims

1. A production plant (1) for laying fiber tapes (2), the production plant (1) comprising:
- a laying device (5) having at least two roll-out devices (9), which roll-out devices (9) each comprise a receiving device (10) for receiving a raw material roll (11), a cutting unit (13) for cutting the fiber tape (2) and a clamping unit (12) for fixing a fiber tape (2) located on the raw material roll (11);
- an application device (6) having an application surface (32) for receiving the fiber tape (2) unreeled from the raw material roll (11), wherein the application surface (32) of the application device (6) and the roll-out device (9) of the laying device (5) are movable relative to one another in the longitudinal extension (33) of the application surface (32) so that the fiber tape (2) can be rolled out in strips onto the application surface (32),
wherein
across the width (34) of the application device (6), the application surface (32) of the application device (6) is divided into at least two sub-regions (35), and each of the sub-regions (35) is assigned to a roll-out device (9) and wherein the at least two sub-regions (35) of the application surface (32) and the respective related roll-out device (9) of the laying device (5) can be moved relative to one another in the longitudinal extension (33) of the application surface (32) independently of the further roll-out device (9) and the further sub-region (35),
**characterized in that**
the cutting unit (13) and/or the clamping unit (12) are mounted on the roll-out device (9) so as to be movable by means of a linear guide (76) and the cutting unit (13) and the clamping unit (12) can thus be moved relative to one another.

2. The production plant according to claim 1, **characterized in that** a manipulation device (7) is provided for manipulating the fiber tape (2) applied to the application device (6) and the manipulation device (7) has a receiving surface (59) for receiving the fiber tape (2), by means of which the fiber tape (2) applied to the application surface (32) can be received by the manipulation device (7) and transferred to another part of the plant.

3. The production plant according to claim 2, **characterized in that** a stacking device (8) is provided, having an application surface (70) for receiving the fiber tape (2) on which the fiber tape (2) transferred by the manipulation device (7) can be stacked, wherein the stacking device (8) is physically disposed at a distance from the application device (6).

4. The production plant according to claim 3, **characterized in that** the application surface (70) of the stacking device (8) is of an air-permeable design and can be subjected to a negative pressure so that the fiber tape (2) applied to the application surface (70) can be fixed thereon.

5. The production plant according to one of the preceding claims, **characterized in that** the application surface (32) of the application device (6) is of an air-permeable design and can be subjected to a negative pressure so that the fiber tape (2) can be fixed on the application surface (32).

6. The production plant according to one of the preceding claims, **characterized in that** the receiving surface (59) of the manipulation device (7) is of an air-permeable design and can be subjected to a negative pressure so that the fiber tape (2) can be fixed on the receiving surface (59).

7. The production plant according to one of the preceding claims, **characterized in that** the cutting unit (13) can be moved in parallel with the application surface (32) of the application device (6) between an extracted cutting position (19) and a retracted unreeling position (20).

8. The production plant according to claim 7, **characterized in that** the cutting unit (13) of the roll-out device (9) is provided in the form of a guillotine, wherein the cutting unit (13) comprises a cutting blade (16) and a counter-holder (17).

9. The production plant according to one of the preceding claims, **characterized in that** several roll-out devices (9) are provided in rows (27) on the laying device (5).

10. The production plant according to claim 9, **characterized in that** the laying device (5) comprises a guide rail (29) on which the roll-out devices (9) are disposed in rows, wherein a row (27) of the roll-out devices (9) can be respectively pulled sideways out of the laying device (5) by means of the guide rail (29).

11. The production plant according to one of the preceding claims, **characterized in that** the roll-out devices (9) have a module width (30) which corresponds to the width (24) of the fiber tape (2), wherein based on a serial arrangement of the roll-out devices (9) in several rows (27), the roll-out devices (9) are disposed at an n-times distance of the module width (30) from one another where n corresponds to the number of rows (27) -1.

12. The production plant according to one of the preceding claims, **characterized in that** the at least two sub-regions (35) of the application surface (32) of the application device (6) can be moved relative to one another and independently of one another in the longitudinal extension (33) of the application surface (32) and that the roll-out devices (9) are disposed on the laying device (5) in a stationary arrangement relative to the longitudinal extension (33) of the application surface (32).

13. The production plant according to one of the preceding claims, **characterized in that** each sub-region (35) of the application surface (32) of the application device (6) is disposed on a separate application profile (37) which can be moved in a horizontal direction (18) relative to a base frame (39) of the application device (6), wherein the application profile (37) is coupled with the base frame (39) by means of a linear guide (38).

14. The production plant according to claim 13, **characterized in that** the application profile (37) is coupled to a toothed belt (47), wherein a first end section (48) of the toothed belt (47) is coupled to a first end section (49) of the application profile (37) and a second end section (50) of the toothed belt (47) is coupled to a second end section (51) of the application profile (37) and the application profile (37) and toothed belt (47) form a continuous loop, wherein the toothed belt (47) engages with a drive unit (52).

15. The production plant according to one of the preceding claims, **characterized in that** a width (36) of a sub-region (35) of the application surface (32) of the application device (6) is of the same size as or slightly smaller than the width (24) of the fiber tape (2) to be processed.

16. The production plant according to one of the preceding claims, **characterized in that** orifices (45) which are air-permeable and can be coupled with a device for generating a negative pressure (46) are provided in the application surface (32) of the application device (6).

17. The production plant according to one of claims 5 to 17, **characterized in that** the sub-regions (35) of the application surface (32) of the application device (6) are divided into longitudinal sub-regions (56) as viewed in the longitudinal extension (33), wherein a negative pressure can be selectively applied to the longitudinal sub-regions (56).

18. The production plant according to one of the preceding claims, **characterized in that** the receiving surface (59) of the manipulation device (7) is mounted so as to be rotatable about its vertical axis (61).

19. The production plant according to one of the preceding claims, **characterized in that** the manipulation device (7) has a heating element (62) which is integrated in the receiving surface (59) or acts on it.

20. The production plant according to one of the preceding claims, **characterized in that** the manipulation device (7) has a feeding unit (63) for feeding in an additive such as a resin.

21. The production plant according to one of claims 1 to 21, **characterized in that** the stacking device (8) comprises a belt conveyor (69), wherein the application surface (70) is provided on a continuously circulating conveyor belt (71) of the belt conveyor (69).

22. The production plant according to one of the preceding claims, **characterized in that** a provisioning station (64) is provided, from which an additional layer, such as a reinforcing mat waiting in readiness, can be picked up by means of the manipulation device (7) and transferred to the application device (6) or to the stacking device (8).

23. The production plant according to one of the preceding claims, **characterized in that** the application surface (32) of the application device (6) is curved in at least certain regions.

24. The production plant according to one of the preceding claims, **characterized in that** the receiving surface (59) of the manipulation device (7) is curved in at least certain regions, wherein the receiving surface (59) is divided in particular into several sub-regions which can be moved relative to one another, thereby enabling the curvature of the receiving surface (59) to be adjusted.

25. The production plant according to one of the preceding claims, **characterized in that** a downholder roll (79) is provided, by means of which the fiber tape (2) can be pressed against the application surface (32) of the application device (6).

26. The production plant according to one of the preceding claims, **characterized in that** the application device (6) has a first machine side (73) with several application profiles (37) and roll-out devices (9) co-operating therewith and a second machine side (74) having several application profiles (37) and roll-out devices (9) co-operating therewith, wherein the application profiles (37) of the first machine side (73) and the application profiles (37) of the second machine side (74) can be movable such that they engage with one another in a meshing arrangement in a machine center (75).

27. A method for laying fiber tapes (2), in particular using a production plant (1) according to one of the preceding claims, wherein the method comprises the following method steps:
- providing a fiber tape (2) on a laying device (5) having several roll-out devices (9), which roll-out devices (9) each comprise a receiving device (10) for receiving a raw material roll (11), a cutting unit (13) for cutting the fiber tape (2), and a clamping unit (12) for fixing a fiber tape (2) located on the raw material roll (11);
- applying the fiber tape (2) to an application surface (32) of an application device (6) and fixing the fiber tape on the application surface (32), wherein according to the width (34) of the application device (6), the application surface (32) of the application device (6) is divided into at least two sub-regions (35) and each of the sub-regions (35) is assigned to a roll-out device (9), and wherein the at least two sub-regions (35) of the application surface (32) and the respective related roll-out device (9) of the laying device (5) can be moved relative to one an-other independently of the further roll-out device (9) and the further sub-region (35) in the longitudinal extension (33) of the application surface (32);
- unreeling the fiber tape (2) by relatively moving each sub-region (35) of the application surface (32) of the application device (6) and the related roll-out device (9) of the laying device (5), wherein the fiber tape (2) is fixed on the application surface (32), as a result of which the fiber tape (2) is unreeled in strips onto the application surface (32) due to the application surface (32) pulling on the fiber tape (2);
- cutting the fiber tape (2) to length by means of the cutting unit (13) of the roll-out device (9),
**characterized in that** the clamping unit and/or the cutting unit are moved, whereby a fiber tape clamped in the clamping unit (12) is moved forward beyond the cutting unit (13) to form a free end which is fixed on the application surface (32) so as to be pulled off the raw material roll (11) by means of the application surface (32).

28. The method according to claim 27, **characterized in that** after cutting the fiber tape (2) to length, the following method steps are carried out:
- picking up the fiber tape (2) cut to length by means of a manipulation device (7) for manipulating the fiber tape (2) applied to the application device (6);
- transferring the fiber tape (2) from the application device (6) to a stacking device (8);
- applying the fiber tape (2) to an application surface (70) of the stacking device (8);
- feeding in the next fiber tape layer (3) and stacking the fiber tape layers (3) one on top of the other.

29. The method according to claim 28, **characterized in that** the application surface (70) on the stacking device (8) for receiving the fiber tape (2) is of an air-permeable design to which a negative pressure is applied so that the fiber tape (2) applied to the application surface (70) is fixed thereon.

30. The method according to one of claims 27 to 29, **characterized in that** the fiber tape (2) is picked up by a receiving surface (59) of the manipulation device (7) due to the fact that it is of an air-permeable to which a negative pressure is applied, wherein in order to transfer the fiber tape (2) from the application device (6) to the manipulation device (7), a negative pressure applied to the application device (6) is switched off.

31. The method according to one of claims 27 to 30, **characterized in that** several of the roll-out devices (9) are disposed adjacent to one another, wherein the roll-out devices (9) are connected to the laying device (5) in a stationary arrangement, and the application surfaces (32) of the application device (6) are provided on several mutually parallel application profiles (37), wherein a pattern of fiber tapes (2) is formed by moving the individual application profiles (37) independently of one another in a longitudinal extension (33) of the application surface (32) and thus pulling the respective fiber tapes (2) off the raw material rolls (11).

32. The method according to one of claims 27 to 31, **characterized in that** in order to cut the fiber tape (2), the cutting unit (13) of the roll-out device (9) is operated in a forward-fed cutting position (19) and the fiber tape (2) is clamped by means of the clamping unit (12) and after cutting the fiber tape (2), the cutting unit (13) and/or the clamping unit (12) are moved relative to one another together so that a cut end of the fiber tape (2) extends out from the cutting unit (13).

33. The method according to one of claims 27 to 32, **characterized in that** in order to fix the free end of the fiber tape (2) on the application surface (32) of the application device (6), a vacuum is applied to the application surface (32) and/or a downholder roll (79) is pressed onto the fiber tape (2).

## Revendications

1. Installation de fabrication (1) pour la pose de bandes de fibres (2), cette installation de fabrication (1) comprenant :
- un dispositif de pose (5) avec au moins deux dérouleurs (9), ces dérouleurs (9) comprenant chacun un dispositif de logement (10) pour le logement d'un rouleau de matériau brut (11), une unité de coupe (13) pour la coupe de la bande de fibres (2) et une unité de serrage (12) pour la fixation d'une bande de fibres (2) se trouvant sur le rouleau de matériau brut (11) ;
- un dispositif de dépôt (6) avec une surface de dépôt (32) pour le logement de la bande de fibres (2) déroulée à partir du rouleau de matériau brut (11), la surface de dépôt (32) du dispositif de dépôt (6) et le dérouleur (9) du dispositif de pose (5) pouvant coulisser l'un par rapport à l'autre dans l'extension longitudinale (33) de la surface de dépôt (32), la bande de fibres (2) pouvant être déroulée par bandes sur la surface de dépôt (32),
la surface de dépôt (32) du dispositif de dépôt (6), vue sur la largeur (34) du dispositif de dépôt (6), étant divisée en au moins deux zones partielles (35), chacune des zones partielles (35) correspondant à un dérouleur (9) et les au moins deux zones partielles (35) de la surface de dépôt (32) et le dérouleur (9) correspondant du dispositif de pose (5) pouvant coulisser les uns par rapport aux autres, indépendamment de l'autre dérouleur (9) et de l'autre zone partielle (35), dans l'extension longitudinale (33) de la surface de dépôt (32),
**caractérisée en ce que**
l'unité de coupe (13) et/ou l'unité de serrage (12) sont logées au moyen d'un guidage linéaire (76) de manière coulissante le long du dérouleur (9) et l'unité de coupe (13) et l'unité de serrage (12) peuvent donc coulisser l'une par rapport à l'autre.

2. Installation de fabrication selon la revendication 1, **caractérisée en ce qu'**un dispositif de manipulation (7) est conçu pour la manipulation de la bande de fibres (2) déposée sur le dispositif de dépôt (6), le dispositif de manipulation (7) comprenant une surface de logement (59) pour le logement de la bande de fibres (2), au moyen de laquelle la bande de fibres (2) déposée sur la surface de dépôt (32) peut être logée par le dispositif de manipulation (7) et peut être transférée vers une autre partie de l'installation.

3. Installation de fabrication selon la revendication 2, **caractérisée en ce qu'**un dispositif d'empilement (8) est réalisé avec une surface de dépôt (70) pour le logement de bande de fibres (2) et sur lequel la bande de fibres (2) transférée par le dispositif de manipulation (7) peut être empilée, le dispositif d'empilement (8) étant distant du dispositif de dépôt (6).

4. Installation de fabrication selon la revendication 3, **caractérisée en ce que** la surface de dépôt (70) du dispositif d'empilement (8) est réalisée de manière perméable à l'air et peut être alimentée par une dépression, ce qui permet de fixer la bande de fibres (2) déposée sur la surface de dépôt (70) sur celle-ci.

5. Installation de fabrication selon l'une des revendications précédentes, **caractérisée en ce que** la surface de dépôt (32) du dispositif de dépôt (6) est réalisée de manière perméable à l'air et peut être alimentée par une dépression, ce qui permet de fixer la bande de fibres (2) sur la surface de dépôt (32).

6. Installation de fabrication selon l'une des revendications précédentes, **caractérisée en ce que** la surface de logement (59) du dispositif de manipulation (7) est réalisée de manière perméable à l'air et peut être alimentée par une dépression, ce qui permet de fixer la bande de fibres (2) sur la surface de logement (59).

7. Installation de fabrication selon l'une des revendications précédentes, **caractérisée en ce que** l'unité de coupe (13) peut coulisser parallèlement à la surface de dépôt (32) du dispositif de dépôt (6) entre une position de coupe avancée (19) et une position de déroulement en retrait (20).

8. Installation de fabrication selon la revendication 7, **caractérisée en ce que** l'unité de coupe (13) du dérouleur (9) est conçue comme une guillotine, l'unité de coupe (13) comprenant une lame de coupe (16) et un contre-support (17).

9. Installation de fabrication selon l'une des revendications précédentes, **caractérisée en ce que** plusieurs dérouleurs (9) sont disposés en rangées (27) le long du dispositif de pose (5).

10. Installation de fabrication selon la revendication 9, **caractérisée en ce que** le dispositif de pose (5) comprend un rail de guidage (29) sur lequel les dérouleurs (9) sont disposés en rangées, moyennant quoi, au moyen du rail de guidage (29), une rangée (27) de dérouleurs (9) peut être retiré latéralement hors du dispositif de pose (5).

11. Installation de fabrication selon l'une des revendications précédentes, **caractérisée en ce que** les dérouleurs (9) présentent une largeur de module (30) qui correspond à la largeur (24) de la bande de fibres (2), moyennant quoi, lors de la disposition en rangées des dérouleurs (9) sur plusieurs rangées (27), les dérouleurs (9) sont disposés les uns par rapport aux autres sur une distance égale à n fois la largeur du module (30), le compteur n correspondant au nombre de rangées (27) - 1.

12. Installation de fabrication selon l'une des revendications précédentes, **caractérisée en ce que** les au moins deux zones partielles (35) de la surface de dépôt (32) du dispositif de dépôt (6) peuvent coulisser indépendamment entre eux dans l'extension longitudinale (33) de la surface de dépôt (32) et **en ce que** les dérouleurs (9) sont disposés de manière stationnaire par rapport à l'extension longitudinale (33) de la surface de dépôt (32) sur le dispositif de pose (5).

13. Installation de fabrication selon l'une des revendications précédentes, **caractérisée en ce que** chaque zone partielle (35) de la surface de dépôt (32) du dispositif de dépôt (6) est disposée sur son propre profilé de dépôt (37), qui peut coulisser dans une direction horizontale (18) par rapport à un châssis de base (39) du dispositif de dépôt (6), le profilé de dépôt (37) étant couplé au moyen d'un guidage linéaire (38) avec le châssis de base (39).

14. Installation de fabrication selon la revendication 13, **caractérisée en ce que** le profilé de dépôt (37) est couplé à une courroie dentée (47), une première portion d'extrémité (48) de la courroie dentée (47) étant couplée à une première portion d'extrémité (49) du profilé de dépôt (37) et une deuxième portion d'extrémité (50) de la courroie dentée (47) étant couplée à une deuxième portion d'extrémité (51) du profilé de dépôt (37) et le profilé de dépôt (37) et la courroie dentée (47) formant une boucle sans fin d'extrémité, la courroie dentée (47) étant engrenée avec une unité d'entraînement (52).

15. Installation de fabrication selon l'une des revendications précédentes, **caractérisée en ce qu'**une largeur (36) d'une zone partielle (35) de la surface de dépôt (32) du dispositif de dépôt (6) est égale ou légèrement inférieure à la largeur (24) de la bande de fibres (2) à traiter.

16. Installation de fabrication selon l'une des revendications précédentes, **caractérisée en ce que**, dans la surface de dépôt (32) du dispositif de dépôt (6), sont disposées des ouvertures de passage (45) qui sont perméables à l'air et sont couplées avec un dispositif de production d'une dépression (46).

17. Installation de fabrication selon l'une des revendications 5 à 17, **caractérisée en ce que** les zones partielles (35) de la surface de dépôt (32) du dispositif de dépôt (6), vues dans l'extension longitudinale (33), sont divisées en zones partielles longitudinales (56), les zones partielles longitudinales (56) pouvant être alimentées de manière sélective avec une dépression.

18. Installation de fabrication selon l'une des revendications précédentes, **caractérisée en ce que** la surface de logement (59) du dispositif de manipulation (7) est logée de manière rotative autour de son axe vertical (61).

19. Installation de fabrication selon l'une des revendications précédentes, **caractérisée en ce que** le dispositif de manipulation (7) comprend un élément chauffant (62) qui est intégré dans la surface de logement (59) ou qui agit sur celle-ci.

20. Installation de fabrication selon l'une des revendications précédentes, **caractérisée en ce que** le dispositif de manipulation (7) comprend une unité d'alimentation (63) pour l'introduction d'un additif, par exemple une résine.

21. Installation de fabrication selon l'une des revendications 1 à 21, **caractérisée en ce que** le dispositif d'empilement (8) comprend un convoyeur à bande (69), la surface de dépôt (70) étant réalisée dans une courroie de convoyage sans fin (71) du convoyeur à bande (69).

22. Installation de fabrication selon l'une des revendications précédentes, **caractérisée en ce qu'**un poste de mise à disposition (64) est réalisé, à l'aide duquel, au moyen du dispositif de manipulation (7), une couche supplémentaire, par exemple une natte de renfort mise à disposition, peut être logée et transférée vers le dispositif de dépôt (6) ou le dispositif d'empilement (8).

23. Installation de fabrication selon l'une des revendications précédentes, **caractérisée en ce que** la surface de dépôt (32) du dispositif de dépôt (6) est incurvée au moins à certains endroits.

24. Installation de fabrication selon l'une des revendications précédentes, **caractérisée en ce que** la surface de logement (59) du dispositif de manipulation (7) est incurvée au moins à certains endroits, la surface de logement (59) étant plus particulièrement divisée en plusieurs zones partielles pouvant coulisser les unes par rapport aux autres, ce qui permet de régler la courbure de la surface de logement (59).

25. Installation de fabrication selon l'une des revendications précédentes, **caractérisée en ce qu'**un rouleau presseur (79) est prévu, au moyen duquel la bande de fibres (2) peut être pressé contre la surface de dépôt (32) du dispositif de dépôt (6).

26. Installation de fabrication selon l'une des revendications précédentes, **caractérisée en ce que** le dispositif de dépôt (6) comprend un premier côté de machine (73) avec plusieurs profilés de dépôt (37) et des dérouleurs (9) correspondants et un deuxième côté de machine (74) avec plusieurs profilés de dépôt (37) et des dérouleurs (9) correspondants, les profilés de dépôt (37) du premier côté de machine (73) et les profilés de dépôt (37) du deuxième côté de machine (74) pouvant coulisser de façon à s'engrener l'un dans l'autre dans un centre de machine (75).

27. Procédé pour la pose de bandes de fibres (2), plus particulièrement à l'aide d'une installation de fabrication (1) selon l'une des revendications précédentes, ce procédé comprenant les étapes suivantes :
- mise à disposition d'une bande de fibres (2) sur un dispositif de pose (5) avec plusieurs dérouleurs (9), ces dérouleurs (9) comprenant chacun un dispositif de logement (10) pour le logement d'un rouleau de matériau brut (11), une unité de coupe (13) pour la coupe de la bande de fibres (2) et une unité de serrage (12) pour la fixation d'une bande de fibres (2) se trouvant sur le rouleau de matériau brut (11) ;
- application de la bande de fibres (2) sur une surface de dépôt (32) d'un dispositif de dépôt (6) et fixation de la bande de fibres à la surface de dépôt (32), la surface de dépôt (32) du dispositif de dépôt (6), vue sur la largeur (34) du dispositif de dépôt (6), étant divisée en au moins deux zones partielles (35) et chacune des zones partielles (35) correspondant à un dérouleur (9) et les au moins deux zones partielles (35) de la surface de dépôt (32) et le dérouleur (9) correspondant du dispositif de pose (5) pouvant coulisser les uns par rapport aux autres, indépendamment de l'autre dérouleur (9) et de l'autre zone partielle (35), dans l'extension longitudinale (33) de la surface de dépôt (32) ;
- déroulement de la bande de fibres (2) par coulissement relatif entre elles d'une zone partielle (35) de la surface de dépôt (32) du dispositif de dépôt (6) et du dérouleur (9) correspondant du dispositif de pose (5), la bande de fibres (2) étant fixée à la surface de dépôt (32), ce qui permet de dérouler la bande de fibres (2) par une traction de la surface de dépôt (32) sur la bande de fibres (2) par bandes sur la surface de dépôt (32) ;
- découpe à la longueur de la bande de fibres (2) au moyen de l'unité de coupe (13) du dérouleur (9), **caractérisé en ce que** l'unité de serrage et/ou l'unité de coupe sont coulissées, ce qui permet d'avancer une bande de fibres serrée dans l'unité de serrage (12) au-delà de l'unité de coupe (13), afin de former une extrémité libre qui est fixée à la surface de dépôt (32) afin qu'elle soit tirée au moyen de la surface de dépôt (32) par le rouleau de matériau brut (11).

28. Procédé selon la revendication 27, **caractérisé en ce que**, après la découpe à la longueur de la bande de fibres (2) les étapes suivantes sont exécutées :
- logement de la bande de fibres (2) découpée à la longueur au moyen d'un dispositif de manipulation (7) pour la manipulation de la bande de fibres (2) déposée sur le dispositif de dépôt (6) ;
- transfert de la bande de fibres (2) du dispositif de dépôt (6) vers un dispositif d'empilement (8) ;
- dépôt de la bande de fibres (2) sur une surface de dépôt (70) du dispositif d'empilement (8) ;
- convoyage de la couche de bande de fibres (3) suivante et empilement des couches de bandes de fibres (3).

29. Procédé selon la revendication 28, **caractérisé en ce que** la surface de dépôt (70) est réalisée de manière perméable à l'air sur le dispositif d'empilement (8) pour le logement de la bande de fibres (2) et est alimentée avec une dépression, ce qui permet de fixer la bande de fibres (2) déposée sur la surface de dépôt (70).

30. Procédé selon l'une des revendications 27 à 29, **caractérisé en ce que** la bande de fibres (2) est prise en charge par une surface de logement (59) du dispositif de manipulation (7) grâce au fait que celui-ci est réalisé de manière perméable à l'air et est alimentée avec une dépression, moyennant quoi, pour le transfert de la bande de fibres (2) du dispositif de dépôt (6) vers le dispositif de manipulation (7), une dépression appliquée au dispositif de dépôt (6) est arrêtée.

31. Procédé selon l'une des revendications 27 à 30, **caractérisé en ce que** plusieurs des dérouleurs (9) sont disposés les uns à côté des autres, les dérouleurs (9) sont reliés de manière stationnaire avec le dispositif de pose (5) et les surfaces de dépôt (32) du dispositif de dépôt (6) sont réalisées sur plusieurs profilés de dépôt (37) parallèles entre eux, un modèle de bandes de fibres (2) étant constitué grâce au fait que les différents profilés de dépôt (37) sont coulissés indépendamment entre eux dans une extension longitudinale (33) de la surface de dépôt (32) et les bandes de fibres (2) correspondantes sont ainsi tirées par les rouleaux de matériau brut (11).

32. Procédé selon l'une des revendications 27 à 31, **caractérisé en ce que**, pour la découpe de la bande de fibres (2), l'unité de coupe (13) du dérouleur (9) est actionné dans une position de coupe avancée (19) et la bande de fibres (2) est serrée au moyen de l'unité de serrage (12) et, après la découpe de la bande de fibres (2), l'unité de coupe (13) et/ou l'unité de serrage (12) sont coulissées l'une par rapport à l'autre de façon à ce qu'une coupe de la bande de fibres (2) soit coulissée en saillie par rapport à l'unité de coupe (13).

33. Procédé selon l'une des revendications 27 à 32, **caractérisé en ce que**, pour la fixation de l'extrémité libre de la bande de fibres (2) à la surface de dépôt (32) du dispositif de dépôt (6), un vide est appliqué à la surface de dépôt (32) et/ou un rouleau presseur (79) est pressé contre la bande de fibres (2).
